(19) Europäisches Patentamt
European Patent Office
Office européen des brevets

(11) **EP 3 645 870 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **18734821.4**

(22) Anmeldetag: **29.06.2018**

(51) Internationale Patentklassifikation (IPC):
**F03D 7/06** *(2006.01)* **F03D 3/06** *(2006.01)*

(52) Gemeinsame Patentklassifikation (CPC):
**F03D 3/068; F03D 7/06;** F05B 2240/214; F05B 2240/9121; F05B 2260/72; F05B 2260/76; F05B 2260/79; Y02E 10/728; Y02E 10/74

(86) Internationale Anmeldenummer:
**PCT/EP2018/067582**

(87) Internationale Veröffentlichungsnummer:
**WO 2019/002549 (03.01.2019 Gazette 2019/01)**

(54) **VERTIKALWINDKRAFTANLAGE MIT ROTORBLATTTRAGENDEM PITCHMOTOR SOWIE BAUSATZ FÜR SELBIGE UND VERFAHREN FÜR IHREN BETRIEB**

VERTICAL WIND TURBINE COMPRISING PITCH MOTOR WITH PROTRUDING ROTOR BLADES, KIT FOR SAME, AND METHOD FOR OPERATING SAME

CENTRALE ÉOLIENNE VERTICALE ÉQUIPÉE D'UN MOTEUR DE PAS PORTANT UNE PALE DE ROTOR ET ENSEMBLE DE PIÈCES DESTINÉES À CELLE-CI ET PROCÉDÉ DE FONCTIONNEMENT DE CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2017 PCT/IB2017/053972**
**30.06.2017 PCT/IB2017/053974**

(43) Veröffentlichungstag der Anmeldung:
**06.05.2020 Patentblatt 2020/19**

(73) Patentinhaber: **Agile Wind Power AG**
**8600 Dübendorf (CH)**

(72) Erfinder:
• **HUG, Thomas, Hans**
**8484 Weisslingen (CH)**
• **ORAM, Christian**
**8415 Berg am Irchel (CH)**
• **WENGER, Johannes**
**8903 Birmensdorf (CH)**

(74) Vertreter: **IPrime Rentsch Kaelin AG**
**Hirschengraben 1**
**8001 Zürich (CH)**

(56) Entgegenhaltungen:
CN-B- 102 536 643     DE-A1-102013 113 863
US-B1- 6 379 115

## Beschreibung

Die vorliegende Erfindung betrifft eine Vertikalwindkraftanlage sowie einen Bausatz für eine Vertikalwindkraftanlage und ein Verfahren zum Betrieb einer Vertikalwindkraftanlage gemäss den Oberbegriffen der Patentansprüche 1 bzw. 15.

## Technologischer Hintergrund

Aus dem Stand der Technik sind Vertikalwindkraftanlagen mit aktiver Flügelsteuerung bekannt. So beschreibt die WO 2015/185299 A1 der Anmelderin eine vertikale Windkraftanlage mit vertikalen Flügeln, die jeweils von einem Servomotor über ein Getriebe angetrieben in eine vorbestimmte und jederzeit änderbare Drehstellung um ihre Drehachse gebracht werden können, wobei virtuelle Kurvenscheiben bereitgestellt werden, welche jeweils den Verlauf des Flügelwinkels über der Position des Flügels auf dem Umlaufkreis festlegen, und wobei die aktive Steuerung nach Massgabe der virtuellen Kurvenscheiben erfolgt.

Des Weiteren betrifft die Europäische Patentschrift EP 2 235 365 B1 der Anmelderin betrifft eine Windkraftanlage mit wenigstens einem um eine vertikale Achse drehbaren Rotor, welcher zwischen zwei horizontalen, in einem Abstand übereinanderliegenden Lagerebenen eine Mehrzahl von auf einem Umfangskreis gleichmässig verteilt angeordneten, jeweils um eine vertikale Schwenkachse schwenkbaren Rotorblättern umfasst, deren Schwenkbereich beidseitig durch einen Anschlag begrenzt ist.

Ferner offenbart die Druckschrift US 3,902,072 A einen Windkraftgenerator mit einer horizontalen rotierenden Plattform, auf der am Aussenumfang eine Vielzahl von vertikalen Flügeln angeordnet ist, die alle koaxial um eine zentrale Achse und jeweils um eine eigene Achse rotieren. Die Drehung der vertikalen Hügel richtet sich nach Änderungen in der Windrichtung und Windgeschwindigkeit und die Drehung jedes einzelnen Flügels ist so gesteuert, dass auf 3/4 des Umlaufsweges der Plattform aus dem Wind Leistung entnommen wird, während auf dem Rest des Weges die Flügel so gestellt sind, dass sie dem Wind minimalen Widerstand bieten. Die Steuerung der Flügel erfolgt über eine zentrale Getriebe-Mechanik mit einem gemeinsamen Servomotor.

Die Druckschrift US 4,410,806 A beschreibt eine Vertikalwindkraftanlage mit einer rotierenden Struktur, die eine Serie von drehbeweglichen vertikalen Flügeln umfasst, deren Stellungen so gesteuert werden, dass sich eine konstante Drehzahl der rotierenden Struktur ergibt, sofern eine ausreichende Windgeschwindigkeit vorliegt. Eine Mikroprozessor-Steuerung verarbeitet Informationen über Windgeschwindigkeit, Windrichtung und Drehzahl der rotierenden Struktur und erzeugt ein elektrisches Signal zum Einstellen der Flügelposition. Die Steuerung der Anlage umfasst elektrische Flügel-Aktuatoren, mit deren Hilfe die Flügel der rotierenden Struktur moduliert werden. Die Flügelmodulation steuert den Anstellwinkel, der seinerseits die Drehzahl des Rotors bestimmt. Ein Windgeschwindigkeitsmesser gibt Daten für Start und Stopp der Anlage aus, während ein Windrichtungsmesser eingesetzt wird, um das Umschlagen der Flügel bei 90° und 270° relativ zur Windrichtung zu halten. Die Steuerung ist so ausgelegt, dass bei Windgeschwindigkeiten zwischen 19 und 40 Meilen/h eine konstante Drehzahl aufrechterhalten wird.

Die Druckschrift US 4,494,007 A offenbart eine Vertikalwindkraftanlage, bei der die Orientierung der um eine gemeinsame zentrale Achse rotierenden Flügel von einer Windfahne über eine gemeinsame Mechanik während ihres Umlaufs um die zentrale Achse so gesteuert wird, dass, wenn sich die Windgeschwindigkeit ändert, die Drehstellung der Flügel verändert wird.

Die Druckschrift US 4,609,827 A beschreibt eine vertikale Windkraftanlage mit Rotorblättern, die ein Flügelprofil aufweisen. Ein positives und synchrones Flügel-Orientierungssystem wird durch einen ausserhalb des Rotors angeordneten Mechanismus gesteuert.

Die Druckschrift WO 2005/100785 A1 beschreibt ein Windrad, das aus einem oder mehreren, in einem Hauptlager um eine vertikale, zentrale Achse rotierenden Flügeln besteht, die parallel zu der senkrechten Achse, über Horizontalträger verbunden und in Lagern frei drehbar angeordnet und durch eine Windfahne ausrichtbar sind. Die Flügel weisen über ihre gesamte Länge im Querschnitt ein aerodynamisches, symmetrisches Profil auf. Durch einen ersten Steuermechanismus werden die Flügel an jedem Umlaufpunkt ihrer Bahn um die vertikale Achse gesteuert durch die Windfahne, mit ihrem Profil längs in Windrichtung ausgerichtet und durch einen zweiten Steuermechanismus werden die Flügel auf den Horizontalträgern derart zum Wind einstellt, dass in Abhängigkeit vom Drehwinkel des Horizontalträgers zur Windfahne und der Drehgeschwindigkeit des Horizontalträgers der oder die Flügel mit den Längsachsen ihres Profils an jedem Umlaufpunkt ihrer Bahn zur Erzeugung einer optimalen aerodynamischen Kraft ausgerichtet sind.

Die Druckschrift WO 2009/082352 A1 befasst sich mit einer Pitchregelungsanordnung für eine Vertikalwindkraftanlage. Excenter-Mittel und Excenter-Folgemittel sind so angeordnet, dass sie den Pitchwinkel eines Turbinenblattes in Übereinstimmung mit einer vorbestimmten zyklischen Variation einstellen.

Schliesslich beschreiben Lixun Zhang, Yingbin Liang, Erxiao Li, Song Zhang und Jian Guo in «Vertical Axis Wind Turbine with Individual Active Blade Pitch Control»; College of Mechanical and Electrical Engineering; Harbin Engineering University; Harbin, China; 2012 IEEE, eine Vertikalwindkraftanlage mit individuell aktiver Flügel-Steuerung, wobei Servomotoren auf die Flügel haltende Arme montiert sind und jeweils über einen Riementrieb eine Pitchwinkelverstellung der Flügel in Abhängigkeit deren Azimut-Winkels bewirken sollen.

Paraschivoiu Ion, Trifu Octavian und Saeed F befassen sich in «H-Darrieus Wind Turbinewith Blade Pitch Control»; International Journal of Rotating Machinery, vol. 2009, mit einer Variation der Pitchwinkel der Flügel einer Vertikalwindkraftanlage in Abhängigkeit vom Azimut-Winkel zur Maximierung eines vom Rotor der Vertikalwindkraftanlage abgegebenen Drehmoments.

Y. Staelens, F. Saeed and 1. Paraschivoiu, beschreiben in «A Straight-bladed Variablepitch VAWT Concept for Improved Power Generation»; ASME 2003, Wind Energy Symposium, vol. 2003, pp. 146-154; January 2003, Untersuchungen zur Leistungsverbesserung von Vertikalwindkraftanlagen mit Flügeln, deren Pitchwinkel variabel ist. An jedem Flügel soll die Tangentialkraft durch Variation des Pitchwinkels in der jeweiligen Drehstellung in Abhängigkeit vom Azimut-Winkel optimiert werden. Verschiedene Flügelprofile werden untersucht.

Ferner ist in US 6 379 115 B1 eine Windkraftanlage mit einer frei drehbaren Rotorwelle und mehreren Paaren von schwenkbaren Stützstangen beschrieben, die an der Rotorwelle vorgesehen sind, und mit Windaufnahmeblättern, die jeweils drehbar zwischen den Stützstangen mit Windaufnahmeblattwellen angeordnet sind. Die Windkraftanlage wird zum Antreiben einer Hebepumpe, eines Generators und dergleichen unter Verwendung einer Rotationsantriebskraft angewendet. Ein Anemometer / Anemoskop misst die Windgeschwindigkeit und -richtung. Ein Servomotor steuert die Richtung der Windaufnahmeblätter basierend auf der erfassten Geschwindigkeit und -richtung. Es werden auch verschiedene Verfahren zur Steuerung der Windkraftanlage bereitgestellt.

Bei aus dem Stand der Technik bekannten Vertikalwindkraftanlagen ist von Nachteil, dass Flügelsteuerung und -antrieb keine zufriedenstellende Energieausbeute bzw. einen angemessenen Wirkungsgrad ermöglichen. Zudem verbraucht der Flügelantrieb zuviel Energie und ist verschleissanfällig, was den Wirkungsgrad und Standzeiten der Anlagen auf unzufriedenstellende Art und Weise minimiert.

**Darstellung der Erfindung**

Eine Aufgabe der Erfindung besteht darin, mindestens einige der Nachteile des Standes zu vermeiden. Insbesondere sollen Wirkungsgrad und Standzeiten von Vertikalwindkraftanlagen gegenüber dem Stand der Technik erhöht werden. Diese Aufgabe wird durch die Merkmale der unabhängigen Patentansprüche 1 und 15 gelöst.

Insbesondere werden die Nachteile aus dem Stand der Technik durch eine erfindungsgemässe Vertikalwindkraftanlage mit einer Vielzahl vertikaler Flügel überwunden, die unabhängig voneinander um eine jeweilige Flügeldrehachse motorisch drehbar beweglich und auf einer gemeinsamen Kreisbahn um eine vertikale Rotordrehachse rotierbar gelagert sind, wobei die Flügel jeweils an wenigstens einem Pitchmotor zum motorischen Drehen der Flügel um ihre jeweilige Flügeldrehachse tragend gehalten befestigt sind.

Mit anderen Worten sind die Flügel jeweils direkt am Pitchmotor getragen. Beispielsweise sind die Flügel unabhängig voneinander jeweils an einer vertikalen Flügelachse befestigt um eine jeweilige Flügeldrehachse motorisch drehbar beweglich und auf einer gemeinsamen Kreisbahn um eine vertikale Rotordrehachse rotierbar gelagert, wobei die Flügelachsen jeweils mit wenigstens einem Pitchmotor zum motorischen drehen der Flügel versehen sind, dessen Motorwelle konzentrisch zur jeweiligen Flügeldrehachse verläuft.

Bei einem erfindungsgemässen Verfahren werden die Nachteile aus dem Stand der Technik überwunden, indem Winkelpositionen um eine jeweilige vertikale Rotordrehachse rotierbar gelagerter und um eine jeweilige Flügeldrehachse motorisch drehbar beweglich angetriebener vertikaler Flügel der Vertikalwindkraftanlage vorgegeben werden, wobei die Winkelpositionen der Flügel durch jeweils wenigstens einen den jeweiligen Flügel zumindest teilweise tragenden Pitchmotor vorgegeben werden.

Mit anderen Worten gibt ein den jeweiligen Flügel tragender Pitchmotor die Winkelposition vor. Die Flügel können jeweils ausschliesslich an einem einzigen Pitchmotor getragen sein, wodurch die gesamte Windkraftanlage als System betrachtet mechanische Bestimmtheit und somit ein sehr günstiges Schwingungsverhalten erlangt. So kann eine Schwingungsfrequenz der Vertikalwindkraftanlage im Betrieb stets unterhalb ihrer Resonanzfrequenz gehalten werden, was dabei hilft, die aus etwaigen Schwingungen resultierenden dynamischen Belastungen der Windkraftanlage zu minimieren und somit deren Wartungsintervalllängen sowie Standzeiten zu erhöhen. Beispielsweise werden Winkelpositionen um eine jeweilige vertikale Flügelachse angetriebener vertikaler Flügel der Vertikalwindkraftanlage vorgegeben, wobei die Winkelpositionen mittels eines direkten Antriebs der Flügel durch einen jeweils konzentrisch zur Flügelachse angeordneten Pitchmotor permanent geregelt werden.

Die erfindungsgemässe Lösung hat den Vorteil, dass sie einen sehr präzisen und energiesparenden Antrieb der Flügel gemäss Pitch-Kurvenscheiben ermöglicht. Die Winkelpositionen der Flügel können ohne Verzögerung und unter Einbezug der variierenden Anlageverhältnisse (Windgeschwindigkeit, Windrichtung, Rotordrehung, Leistungsabgabe, etc.) bei einer Leistungsaufnahme der Pitchmotoren von maximal unter 10 % bis vorzugsweise unterhalb 0.5 %, beispielsweise 0.3 %, einer Generatorleistung der Vertikalwindkraftanlage optimal eingestellt werden.

Durch die erfindungsgemässe Lösung kann ein für Vertikalwindkraftanlagen bestehendes Erfordernis erfüllt werden, die Schnelllaufzahl A so zu wählen, dass der Winkel zwischen dem Anströmvektor des Windes und der Rotorblattsehne (der sog. Anstellwinkel) einen Wert nicht überschreitet bei dem die Strömung vom Profil abreisst. Die Schnelllaufzahl $\lambda$ ist definiert durch das Verhältnis der Umdrehungsgeschwindigkeit des Rotors zur Windgeschwindigkeit. Erfindungsgemässe vertikale Windkraftanlagen weisen bis zu einer Nenndrehzahl eine Schnelllaufzahl A von 2 bis 2.5, vorzugsweise ca. 2.3 auf, die durch eine Umfangsgeschwindigkeit der Flügel von ca. 27.6 m/s bei einer Windgeschwindigkeit im Nennbetrieb von 12 m/s festgelegt ist ($\lambda$=27.6 / 12 = 2.3).

Je höher die Schnelllaufzahl, desto kleiner der Anstellwinkel zum Profil. In der Realität heisst das, dass vertikale Windenergieanlagen in der Regel mit Schnelllaufzahlen A von über 4 betrieben werden. Dies führt zwangsläufig zu hohen Drehzahlen oder aber zu grossen Rotorradien um die für die Schnelllaufzahl notwendige Umfangsgeschwindigkeit zu erreichen. Hohe Umfangsgeschwindigkeiten wiederum erhöhen parasitäre Verluste, die durch Luftwiderstände von beispielsweise Rotorarmen und Abspannungen verursacht werden. Derartige Verluste gehen mit der dritten Potenz der Umfangsgeschwindigkeit in den Energieertrag ein.

Eine erfindungsgemässe permanente Pitch-Steuerung der Flügel hilft, die Schnelllaufzahl optimaler Weise möglichst konstant zu halten und gleicht negative Auswirkungen stark und schnell ändernder Windverhältnisse aus. Dadurch wird eine optimale Energieausbeute im Teillastbetrieb erreicht. Somit erlauben erfindungsgemässe Vertikalwindkraftanlagen eine wirtschaftlich effiziente Nutzung der Windenergie auch an Standorten mit stark wechselnden Windverhältnissen.

Im Weiteren tragen hohe Umfangsgeschwindigkeiten zu einer hohen Geräuschentwicklung sowie zu hohen Zentrifugalbeschleunigungen bei. Durch eine kontinuierliche Steuerung der Rotorblätter, wie sie bei erfindungsgemässen Vertikalwindkraftanlagen realisiert ist, kann im Prinzip jede Schnelllaufzahl gefahren werden und dies bei optimalem Pitchwinkel. Das heisst, ein Strömungsabriss kann auch bei tiefen Schnelllaufzahlen vermieden werden. Dadurch kann der optimale Betriebsbereich unter Einbezug parasitärer Widerstände evaluiert werden.

Numerische Simulationen mit einem DMS Modell (*Double Multiple Streamtube*) ergeben für erfindungsgemässe vertikaler Windkraftanlagen gemäss einem Ausführungsbeispiel eine maximale Energieausbeute bei einer Schnelllaufzahl von beispielsweise $\lambda$=2.3. Unter Miteinbezug geometrischer Dimensionen erfindungsgemässer Vertikalwindkraftanlagen ergeben sich hiermit Umfangsgeschwindigkeiten von ca. 100 km/h, was zu deutlich geringeren Geräuschentwicklungen als bei herkömmlichen Horizontalwindkraftanlagen sowie aus dem Stand der Technik bekannten Vertikalwindkraftanlagen führt, weil die Umfangsgeschwindigkeit sich in der 6. Potenz auf die Schallleistung auswirkt.

Ferner können in Verbindung mit einem Windparkwirkungsgrad von Vertikalwindkraftanlagen, der bei ca. 20 % liegt und damit günstiger ausfällt als ein bei ca. 10% liegenden Windparkwirkungsgrad von Horizontalwindkraftanlagen, erfindungsgemäss ausgestaltet und betriebene Vertikalwindkraftanlagen insbesondere in Windparks effizienter und kostengünstiger als Horizontalwindkraftanlagen bzw. mit doppeltem Windparkwirkungsgrad betrieben werden. Zudem sind erfindungsgemässe Vertikalwindkraftanlagen in einem Leistungsbereich von beispielsweise 750 kW Generatorleistung anders als Horizontalwindkraftanlagen ideal für das stark wachsende Segment des "*Distributed Wind Markets*" geeignet, in welchem umwelt- und gesellschaftlich verträgliche Lösungen sehr relevant sind (besiedelte Gebiete, logistisch anspruchsvolle Windstandorte).

Darüber hinaus weisen erfindungsgemässe Vertikalwindkraftanlagen ein vorteilhaftes Nachlaufverhalten auf. Indem die Flügel mithilfe der Pitchmotoren in ihrer Winkelposition variabel gehalten werden, was Strömungsabrisse verhindern hilft, werden Turbulenzen im Nachlauf minimiert. Eine daraus resultierende geringe Tubulenzintensität im Nachlauf erlaubt kürzere Abstände zwischen erfindungsgemässen Vertikalwindkraftanlagen und verbessert somit deren Parkwirkungsgrad weiter.

Infolge relativ kleiner und/oder leichter Bauteile und Komponenten ist eine Aufstellung von Vertikalwindkraftanlagen im Gegensatz zu Horizontalwindkraftanlagen ohne Schwertransport auch bei unwegsamem Gelände möglich. In normalem Gelände können alle (auch schweren) Bauteile einer Vertikalwindkraftanlage mit Hilfe eines herkömmlichen LKWs ohne Sondertransport transportiert werden. Im gebirgigen Gelände können die Komponenten mit leichtem Hubschrauber und die wenigen schweren Bauteile mit einem geländegängigen Fahrzeug transportiert werden.

Erfindungsgemässe Vertikalwindkraftanlagen können durch ein Selbstaufbau-System ohne Verwendung von zusätzlichen Schwerlastkränen installiert werden. Das Selbstaufbau-System umfasst einen zentralen, mit einem Turm bzw. Turmsystem einer erfindungsgemässen Vertikalwindkraftanlage mitwachsenden Kran und Schwerlastaufzugsrollen, die im Turm und/oder an Armen der Vertikalwindkraftanlage angeordnet sind. Alle schweren Hauptkomponenten können mittels einer mobilen Seilwinde am Boden und Umlenkrollen im Turm auf ihre jeweilige Montagehöhe gehievt werden.

Für Reparaturdemontagen und Montagearbeiten an den Rotorblättern und Blattlagern wird temporär nur ein kleiner Kran mit Hilfe eines Hubschraubers zuoberst auf einem jeweiligen Rotorarm platziert. Bei einfachen Wartungs- und Reparaturarbeiten auf dem Rotor wird dieser formschlüssig arretiert. Im Falle von Rotorlager-, Generator- oder Getriebeschäden muss der Rotor zu deren Demontage nicht abgebaut werden. Er wird im Stillstand mit einer Hub-Vorrichtung auf dem Turm mechanisch fixiert und so ein den Rotor tragendes Drucklager von der Rotorlast befreit. Diese Fixierung ist sturmlastbeständig. Die allfällig zu reparierenden Komponenten können dann ohne Kran mittels Seilwinde und Umlenkrollen im Turm abgesenkt und unten direkt auf einen LKW aufgeladen werden.

Schliesslich ist bei erfindungsgemässen vertikalen Windkraftanlagen noch hinsichtlich ihrer Umweltverträglichkeit von Vorteil, dass die Silhouette des vertikal ausgerichteten Rotors für Vögel und Fledermäuse besser erkennbar ist als ein horizontal drehender Dreiblattrotor. Zudem sind die Rotorblattgeschwindigkeiten mit maximal 100 km/h deutlich geringer als bei Horizontalwindkraftanlagen, bei denen Blattspitzengeschwindigkeiten von 300 bis 400 km/h auftreten. Das relativ langsam drehende Rotorsystem erfindungsgemässen Vertikalwindkraftanlage weist im Gegensatz zu Horizontalwindkraftanlagen einen ruhigen Schattenwurf sowie eine geringe Eiswurfweite auf. Das Erscheinungsbild einer erfindungsgemässen Vertikalwindkraftanlage integriert sich mit seinen hauptsächlich vertikalen Linien gut in die umliegende Landschaft.

Die erfindungsgemässe Lösung kann durch die folgenden weiteren, jeweils für sich vorteilhaften Ausführungsformen beliebig ergänzt und weiter verbessert werden, wobei ein Fachmann ohne Weiteres klar und eindeutig erkennen wird, dass Vorrichtungsmerkmale einer erfindungsgemässen Vertikalwindkraftanlage entsprechende Schritte eines erfindungsgemässen Verfahrens begründen und umgekehrt.

Gemäss einer ersten weiteren Ausführungsform einer erfindungsgemässen Vertikalwindkraftanlage ist vorgesehen, dass der Pitchmotor als Torquemotor ausgestaltet ist, mit wenigstens einem Rotorring, der mit dem jeweiligen Flügel drehstarr verbunden ist. Dazu kann der Pitchmotor als Torquemotor ausgestaltet sein, mit wenigstens einem Rotor, der mit der Flügelachse drehstarr verbunden ist. Beispielsweise kann der Torquemotor als permanenterregter bürstenloser Gleichstrommotor in Innenläufer-Bauform ausgeführt sein. Der somit entlang seines äusseren Umfangs von einem Stator des Pitchmotors umgebene Rotor kann mit Hilfe eines Spannsatzes zur Drehmomentübertragung einfach und effektiv mit einer Motorwelle des Pitchmotors drehstarr verbunden sein.

Gemäss einer weiteren Ausführungsform ist vorgesehen, dass der Rotorring aussenumfangsseitig auf einer Motorwelle des Pitchmotors aufliegt. Somit kann ein vom Pitchmotor erzeugtes Drehmoment direkt an die Motorwelle und somit den Flügel übertragen werden. Der Flügel ist also vorteilhafter Weise durch den Motor direkt angetrieben. Beispielsweise sind die Flügelachsen an Motorlagern im Pitchmotor gelagert. Mit anderen Worten können die Flügel im Pitchmotor drehbeweglich gehalten sein. Beispielsweise kann die Lagerung durch Schrägrollen- bzw. Wälz- oder Kegelrollenlager realisiert werden, die zwischen Flügelachse und Motor einerseits sowie Stator andererseits axial vorgespannt angeordnet sind, um sowohl Axial- als auch Radialkräfte aufzunehmen. Dies ermöglicht eine präzise Lagerung der Flügelachsen bei hohen Standzeiten und einem hocheffizienten Antrieb der Flügelachsen durch den Pitchmotor bei geringen Reibungsverlusten.

Gemäss einer weiteren Ausführungsform ist vorgesehen, dass die Flügel an Motorlagern im Pitchmotor gelagert getragen sind. Folglich können sowohl von den Flügeln ausgehende Horizontalkräfte als auch Vertikalkräfte, inklusive einer Gewichtskraft der Flügel, an den Motorlagern aufgenommen werden. Beispielsweise sind die Motorlager innerhalb eines mit Hilfe von Dichtelementen gegenüber einer Umgebung der Vertikalwindkraftanlage abgedichteten Lageraufnahmeraum angeordnet. Innerhalb des Lageraufnahmeraums kann sich Schmiermittel, beispielsweise ein Fett, zum Schmieren der Motorlager befinden. Vorzugsweise ist der Lageaufnahme mit dem Schmiermittel gefüllt, das je nach Anforderungen beispielsweise alle 5 Jahre ausgetauscht bzw. wieder aufgefüllt wird. Somit wird eine effektive Schmierung der Motorlager erzielt, was dabei hilft, Standzeiten einer erfindungsgemässen Vertikalwindkraftanlage weiter zu maximieren.

Der Lageraufnahmeraum kann gegenüber einem Motorinnenraum wiederum mit Hilfe weiterer Dichtelemente abgedichtet sein, sodass der Motorinnenraum im Wesentlichen hermetisch abgeschlossen vor schädlichen Umwelteinflüssen geschützt ist. Der Motorinnenraum kann zumindest abschnittsweise durch ein Motorgehäuse gebildet bzw. davon umschlossen sein.

Ein Expansions- bzw. Ausgleichsgefäss kann über wenigstens eine Fluidleitung mit dem hermetisch abgeschlossenen Motorinnenraum fluidleitend verbunden sein und ein veränderliches Expansions- bzw. Ausgleichsvolumen bereitstellen, um temperaturbedingte Volumenveränderungen von Fluiden, insbesondere Luft, die sich in Freiräumen innerhalb des Motorraums befinden, auszugleichen. Zur Verminderung von Freiräumen im Motorinnenraum können Raumfüllelemente im Motorraum angeordnet sein, die beispielsweise aus Schaumstoff geformt sein können. Expansionsgefäss und Raumfüllelemente helfen zum einen, Kondensation von Luftfeuchtigkeit im Motorinnenraum zu vermeiden. Zum anderen verhindern Expansionsgefäss und Raumfüllelemente, dass Lager- und/oder Motorschmiermittel, wie beispielsweise Fett, bei Druckschwankungen verdrängt werden bzw. auslaufen.

Gemäss einer weiteren Ausführungsform ist vorgesehen, dass die Flügel einen oberen Flügelabschnitt und einen unteren Flügelabschnitt umfassen, und dass der Pitchmotor zwischen oberem und unterem Flügelabschnitt angeordnet ist. Der Pitchmotor kann also beide Flügelabschnitte tragen, wobei sich der obere Flügelabschnitt nach oben und der untere Flügelabschnitt nach unten vom Pitchmotor wegerstreckt. Somit können vom Pitchmotor erzeugte, auf die Flügel wirkende Drehmomente bzw. Stellkräfte unter Bezug auf die Längserstreckung der Flügel in vertikaler Richtung möglichst symmetrisch in die Flügel eingeleitet werden.

Alternativ oder zusätzlich kann vorgesehen sein, dass die Flügel an wenigstens einem vom Pitchmotor beabstandet angeordneten zusätzlichen Lagerpunkt um ihre Flügeldrehachse drehbar gelagert sind. So kann der Pitchmotor beispielsweise zwischen zwei zusätzlichen Lagerpunkten angeordnet sein. Daraus ergeben sich pro Flügel jeweils zwei Flügelabschnitte, nämlich ein Flügelabschnitt zwischen oberem Lagerpunkt und Pitchmotor sowie ein Flügelabschnitt zwischen Pitchmotor und unterem Lagerpunkt.

Vorzugsweise befindet sich jeweils eine Lagereinheit an den äusseren vom Pitchmotor wegweisenden Enden des Flügels. Die Lagereinheit umfasst ein Gehäuse, zwei Wälzlager und eine Hohlwelle, welche Rotorblätter der Flügel miteinander verbindet. An den zusätzlichen Lagerpunkten können Pendelrollenlager verwendet sein, die hauptsächlich in den Flügelenden auftretende hohe Radialkräfte aufnehmen und das gesamte Rotorsystem versteifen helfen. Hingegen können die Motorlager, beispielsweise zwei axial vorgespannte Kegelrollenlager umfassen, die gesamte Gewichtskraft der Flügel aufnehmen.

Gemäss einer weiteren Ausführungsform ist vorgesehen, dass die Flügel an den Pitchmotor angeflanscht sind. Dazu kann ein Flanschabschnitt des Flügels direkt an der Motorwelle bzw. den Rotor des Pitchmotors befestigt sein. Somit lassen sich die vom Pitchmotor erzeugten Drehmomente bzw. Stellkräfte unmittelbar auf den Flügel übertragen. Alternativ oder zusätzlich können die Flügel bzw. die Flügelachsen jeweils einen Flügelblattachsabschnitt im Bereich eines Flügelblatts des Flügels sowie einen zwischen Flügelblattachsabschnitt und Motorwelle angeordneten Übergangsabschnitt umfassen. Übergangsabschnitt und Motorwelle können beispielsweise einstückig aus Metall ausgeformt sein. Der Übergangsabschnitt erlaubt eine optimale Verbindung zwischen Motorwelle und Flügelblattachsabschnitt. Der Übergangsabschnitt kann sich von der Motorwelle weg verlaufend verjüngen. Beispielsweise kann der Übergangsabschnitt zapfenartig ausgestaltet sein. Ein Aussendurchmesser der Motorwelle kann grösser als ein Innendurchmesser des Flügelblattachsabschnittes sein. Somit hilft der Übergangsabschnitt, Grössenunterschiede zwischen Motorwelle und Flügelblattachsabschnitt zu überwinden und diese passgenau miteinander zu verbinden.

Gemäss einer weiteren Ausführungsform ist vorgesehen, dass der Pitchmotor wenigstens einen Drehgeber zur Bestimmung einer Drehposition des Flügels umfasst. Der Drehgeber umfasst vorzugsweise einen Absolutpositionsgeber und einen Relativpositionsgeber. Beispielsweise umfasst der Absolutpositionsgeber einen Magnetring oder -streifen, der sich entlang des Aussenumfanges der Motorwelle erstreckt und Inkremente unterschiedlicher Magnetisierung mit entlang des Aussenumfangs irregulären Abständen untereinander bzw. irregulären Längen aufweist. Der Relativpositionsgeber umfasst beispielsweise einen Magnetring oder -streifen, der sich entlang des Aussenumfanges der Motorwelle erstreckt und Inkremente unterschiedlicher Magnetisierung mit entlang des Aussenumfangs regulären, d.h. gleichförmigen Abständen untereinander bzw. regulären bzw. gleichförmigen Längen aufweist.

Gemäss einer weiteren Ausführungsform ist vorgesehen, dass die Pitchmotoren jeweils über ein Motorgehäuse verfügen, an dem ein die Flügel mit einer Rotornabe der Vertikalwindkraftanlage verbindender Rotorarm befestigt ist. Mit anderen Worten können die Pitchmotoren also jeweils über ein Motorgehäuse verfügen, an dem eine die Flügel mit einer Rotornabe der Vertikalwindkraftanlage verbindende Flügelaufhängung befestigt ist. Die Flügelaufhängung kann alternativ oder zusätzlich beispielsweise eine Vielzahl von Streben umfassen. Wenigstens eine dieser Streben kann zum Halten des jeweiligen Flügels direkt mit dem Pitchmotor verbunden sein.

Gemäss einer weiteren Ausführungsform ist vorgesehen, dass der Rotorarm an das Motorgehäuse angeflanscht ist. Dazu kann am Motorgehäuse ein Motorflansch ausgebildet sein, an dem der Arm montiert ist. Das Motorgehäuse besitzt mindestens zwei Gehäuseschalen, wie beispielsweise eine obere und eine untere Gehäuseschale. An den beiden Gehäuseschalen kann jeweils eine Flanschhälfte des Motorflansches ausgeformt sein.

Alternativ oder zusätzlich kann die Flügelaufhängung eine Vielzahl von Streben umfassen, wobei jeweils wenigstens eine Strebe an das Motorgehäuse angeflanscht ist. Vorteilhafterweise kann jeweils eine Strebe aussen am Motorgehäuse im Bereich eines Aussenumfanges des Stators an den Pitchmotor stirnseitig angeflanscht sein. Dies erlaubt eine gewichtssparende hochstabile Konstruktion des gesamten Rotors, da der Pitchmotor gleichzeitig als Antriebs-, Lager- und Verbindungspunkt zwischen Flügelaufhängung und Flügel dient.

Gemäss einer weiteren Ausführungsform ist vorgesehen, dass ein Statorring des Pitchmotors zwischen zwei Flanschhälften eines Aufhängungskranzes des Motorgehäuses und/oder zwischen einer Oberschale und einer Unterschale einer den Pitchmotor zumindest abschnittsweise einhausenden Verschalung angeordnet ist. Der Pitchmotor ist also vorzugsweise mit einer nach aerodynamischen Aspekten ausgeformten Verschalung verkleidet. Die Verschalung hilft einerseits, einen Luftwiderstand des Pitchmotors zu reduzieren. Andererseits hilft die Verschalung, einen Spalt zwischen Pitchmotor und Flügelblättern und somit an einem solchen Spalt auftretende Druckverluste zwischen den beiden Seitenflächen des Flügels am zum Pitchmotor zugewandten Ende des jeweiligen Flügelblattes zu vermeiden oder zumindest zu reduzieren. Dadurch lässt sich der Wirkungsgrad einer erfindungsgemässen Vertikalwindkraftanlage weiter steigern.

Alternativ oder zusätzlich kann vorgesehen sein, dass das Motorgehäuse Stützlamellen umfasst, die radial zur Motorwelle verlaufend einen Lagersitz des Pitchmotors aussenumfangsseitig mit einer in Achsrichtung weisenden Wandung des Pitchmotorgehäuses verbinden. Derartige Stützlamellen helfen, von der Motorwelle über die Lagerpunkte auf das Motorgehäuse einwirkenden Kräfte sicher auf einen Anbindungspunkt der Flügelaufhängung am Motorgehäuse, wie beispielsweise den oben genannten Motorflansch, zu übertragen. Die Steifigkeit des Motorgehäuses ist erhöht, während dessen Gewicht möglichst gering gehalten ist.

Gemäss einer weiteren Ausführungsform ist vorgesehen, dass die Verschalung wenigstens einen Ansaugstutzen und wenigstens eine Ablassöffnung ausbildet, um Kühlluft zwischen Ansaugstutzen und Ablassöffnung zumindest abschnittsweise entlang eines am Statorring angebrachten Kühlkörpers zu leiten. Ein zwischen Ansaugstutzen und Ablassöffnung gebildeter Luftkanal hilft, Strömungsabrisse der entlang des Kühlkörpers geleiteten Kühlluft und somit durch Strömungsabrisse entstehende Wirbelschleppen in der Kühlluft zu vermeiden. Somit lässt sich die Kühlleistung der Kühlluft am Kühlkörper erhöhen, was dabei hilft, eine Überhitzung des Pitchmotors zu vermeiden.

Wie bereits oben erwähnt, ist der Pitchmotor vorzugsweise mit einer nach aerodynamischen Aspekten ausgestalteten Verschalung verkleidet. Durch die Verschalung kann ein vom Pitchmotor verursachter Luftwiderstand minimiert werden, was dabei hilft, den Wirkungsgrad einer erfindungsgemässen Vertikalwindkraftanlage weiter zu erhöhen. Des Weiteren hilft die Verschalung, etwaige Zwischenräume zwischen Flügelabschnitten bzw. zwischen den Flügelabschnitten und dem Motor zu minimieren und folglich einen Druckausgleich an den Zwischenräumen zu verhindern. Auf ähnliche Art und Weise können im Bereich der zusätzlichen Lagerpunkte bzw. Lagereinheiten zwischen Flügelabschnitten ebenfalls Verschalungen oder Abdeckungen vorgesehen sein, um einem Druckausgleich und damit verbundenem Wirkungsgradverlust entgegenzuwirken.

Gemäss einer weiteren Ausführungsform besitzt die Vertikalwindkraftanlage ein Getriebe, das einen um die Rotordrehachse drehbaren Rotor der Vertikalwindkraftanlage mit einem Generator der Vertikalwindkraftanlage koppelt, wobei wenigstens eine Getriebestufe des Getriebes als Planetengetriebe bzw. Planetengetriebestufe ausgestaltet ist. Beispielsweise kann das Getriebe wenigstens ein Planetengetriebe und ein zusätzliches Stirnradgetriebe umfassen. Vorzugsweise besitzt das Getriebe zwei Planetengetriebestufen, die in axialer Richtung der Rotordrehachse übereinanderliegend angeordnet sind. Somit besitzt das Getriebe eine kompakte Bauform bei möglichst hoher Effizienz und Langlebigkeit.

Gemäss einer weiteren Ausführungsform ist vorgesehen, dass wenigstens ein Planetenzahnrad des Planetengetriebes bzw. der Planetengetriebestufe über einen flexiblen Pin mit einem Steg des Planetengetriebes bzw. der Planetengetriebestufe verbunden ist. Ein derartiger flexibler Pin ermöglicht minimale Auslenkungen des Planetenzahnrades. Vorzugsweise sind sämtliche Planetenzahnräder an flexiblen Pins gelagert. Flexible Pins helfen, Belastungen des Getriebes infolge von ungleichen Belastungen der Planetenzahnräder bzw. deren Zahnflanken, zu minimieren. Die flexiblen Pins sorgen für eine gleichmässige Aufteilung der Getriebebelastung unter den Planetenzahnrädern. Die an den flexiblen Pins gelagerten Planetenzahnräder können die Belastung sozusagen unter sich aufteilen. Dadurch lassen sich Wartungsintervalle und Standzeiten einer erfindungsgemässen Vertikalwindkraftanlage weiter verlängern.

Hingegen kann es bei einer starren Lagerung der Planetenzahnräder zu einseitigen Belastungen gewisser Planetenzahnräder kommen, wodurch nicht nur ein Verschleiss dieser Planetenzahnräder steigt, sondern darüber hinaus das gesamte Getriebe grösser dimensioniert werden muss als mit flexiblen Pins, weil die starr gelagerten Planetenzahnräder höheren Belastungen ausgesetzt sind als die an flexiblen Pins gelagerten Planetenzahnräder. Mithin erlauben die flexiblen Pins also eine Verkleinerung des gesamten Getriebes, was dabei hilft, Materialeinsatz und Fertigungsaufwände sowie somit Kosten einzusparen.

Gemäss einer weiteren Ausführungsform weist die Vertikalwindkraftanlage eine Steuerungseinrichtung auf, die zur Steuerung der Pitchmotoren mit diesen und mit wenigstens einem Windgeschwindigkeitssensor und/oder wenigstens einem Windrichtungssensor signalübertragend verbunden ist. Die Steuerungseinrichtung berechnet beispielsweise zyklisch einen Soll-Winkel der Flügel für jeden Pitchmotor und übergibt diese über eine Kommunikationseinrichtung an einem Steuerteil eines Umrichtersystems, das neben dem Steuerteil noch einen Versorgungsteil für jeden Pitchmotor besitzt. Der Steuerteil bewirkt eine Lageregelung der Flügel zur Einstellung einer gewünschten Winkelposition gemäss Soll-Winkel. Dazu kann das Leistungsteil dauerhaft einen elektrischen Strom von beispielsweise 150 $A_{RSM}$ umrichten und kurzfristig einen Spitzenstrom von 210 $A_{RMS}$ ausgeben, um ein maximales Drehmoment der Pitchmotoren zu erreichen. Die Steuerungseinrichtung überwacht dabei eine Genauigkeit der Flügelverstellung und ein Zustand der Antriebsregelung und kann diese beeinflussen.

Gemäss einer weiteren Ausführungsform ist vorgesehen, dass der wenigstens eine Windgeschwindigkeitssensor und/oder der wenigstens eine Windrichtungssensor im Bereich wenigstens einem der Pitchmotoren angeordnet ist. Beispielsweise kann der wenigstens eine Windgeschwindigkeitssensor und/oder der wenigstens eine Windrichtungssensor an einem Stab angebracht sein, der am Pitchmotor oder im Bereich des Pitchmotors befestigt ist und über eine Aussenkante des Flügels hinaus ragt. Insbesondere kann der wenigstens eine Windgeschwindigkeitssensor und/oder der wenigstens eine Windrichtungssensor an einem distalen, vom Flügel weg weisenden Ende des Stabes angebracht sein. Somit ist der wenigstens eine Windgeschwindigkeitssensor und/oder der wenigstens eine Windrichtungssensor vorzugsweise ausserhalb eines Einflussbereiches des Flügels angeordnet, in dem vom Flügel verursachte Luftströmungsänderungen bzw. Turbulenzen auftreten könnten. Alternativ oder zusätzlich können Sensoren, wie Windgeschwindigkeitssensor und/oder Windrichtungssensor sowie weitere Signal- und Messmittel an einem zentral auf der Rotornabe angeordneten vorzugsweise in Höhenrichtung über ein oberes Ende der Flügel hinwegragenden Mast angeordnet sein.

Alternativ oder Zusätzlich kann wenigstens ein Windgeschwindigkeits- und/oder - richtungssensor im Bereich der Motornabe angeordnet sein. Beispielsweise kann die Anzahl verwendeter Windgeschwindigkeits- und/oder -richtungssensoren mit der jeweiligen Anzahl von Flügen bzw. Armen der Vertikalwindkraftanlage übereinstimmen. Windgeschwindigkeits- und/oder -richtungssensoren im Bereich der Motornabe können an enden von sich von der Rotornabe weg erstreckenden Stäben angeordnet befestigt sein. Die Windgeschwindigkeits- und/oder -richtungssensoren im Bereich der Motornabe können vorzugsweise zwischen den Flügeln bzw. deren Armen, mit anderen Worten versetzt zu den Flügeln, angeordnet sein, um eine Windverschattung der Windgeschwindigkeits- und/oder -richtungssensoren im Bereich der Motornabe durch die Flügel zu vermeiden.

Gemäss einer weiteren Ausführungsform ist vorgesehen, eine erfindungsgemässe Vertikalwindkraftanlage als Bausatz bereitzustellen. Wie schon oben erwähnt, ermöglicht ein derartiger Bausatz, der im Wesentlichen alle Komponenten und Bauteile der Vertikalwindkraftanlage sowie Hilfsmittel für deren Installation, wie beispielsweise Kräne, Winden und dergleichen, beinhalten kann, eine erfindungsgemässe Vertikalwindkraftanlage an Orten zu installieren, die für Horizontalwindkraftanlagen nicht oder nur kaum zugänglich sind. Eine Bereitstellung einer erfindungsgemässen Vertikalwindkraftanlage als Bausatz hilft zudem, sicherzustellen, dass sämtliche zur Installation, zum Betrieb und zur Wartung der Vertikalwindkraftanlage notwendigen Komponenten, Bauteile und Hilfsmittel aus kontrollierten Bezugsquellen stammen und gewünschten Sicherheit- sowie Qualitätsanforderungen genügen.

Ein erfindungsgemässes Verfahren zum Betrieb einer Vertikalwindkraftanlage kann gemäss einer weiteren Ausführungsform dadurch verbessert werden, dass die Winkelpositionen durch Pitch-Kurvenscheiben vorgegeben werden. Somit liegen im Wesentlichen für jeden Azimut-Winkel Sollwerte zur Einstellung der Winkelposition vor. Für verschiedene Windgeschwindigkeiten können verschiedene Pitch-Kurvenscheiben vorgesehen werden.

Gemäss einer weiteren Ausführungsform eines erfindungsgemässen Verfahrens wird beim permanenten Regeln eine Windgeschwindigkeit, Windrichtung und Rotordrehung eines die Flügel umfassenden Rotors der Vertikalwindkraftanlage mit einbezogen. Somit kann eine erfindungsgemässe Vertikalwindkraftanlage mit möglichst geringen Soll-Wert-Abweichungen der Winkelpositionen und daher höchst effizient betrieben werden.

Ferner werden die Nachteile aus dem Stand der Technik durch eine erfindungsgemässe Vertikalwindkraftanlage mit einer Vielzahl vertikaler Flügel überwunden, die unabhängig voneinander jeweils an einer vertikalen Flügelachse befestigt um eine jeweilige Flügeldrehachse drehbar und auf einer gemeinsamen Kreisbahn um eine vertikale Rotordrehachse rotierbar gelagert sind, wobei die Vertikalwindkraftanlage dazu ausgestaltet ist, einen Pitchwinkel der Flügel zumindest in einem Teillastmodus der Vertikalwindkraftanlage so zu regeln, dass die Flügel mit einer im Wesentlichen konstanten Schnelllaufzahl A rotieren.

Bei einem erfindungsgemässen Verfahren werden die Nachteile aus dem Stand der Technik ferner überwunden, indem Pitchwinkel um eine jeweilige vertikale Flügelachse angetriebener vertikaler Flügel der Vertikalwindkraftanlage vorgegeben werden, wobei die Pitchwinkel zumindest in einem Teillastmodus der Vertikalwindkraftanlage so geregelt werden, dass die Flügel mit einer im Wesentlichen konstanten Schnelllaufzahl A rotieren.

Gemäss einer weiteren Ausführungsform einer erfindungsgemässen Vertikalwindkraftanlage ist vorgesehen, dass die Vertikalwindkraftanlage zum Betrieb im Teillastmodus in einem Bereich von Windgeschwindigkeiten ausgelegt ist, der zumindest abschnittsweise zwischen 3 bis 12 m/s liegen. Ein derartiger Teillastbereich ist sowohl für Binnen- als auch Küstenstandorte geeignet und gewährleistet eine hohe Energieausbeute sowie relativ viele Volllaststunden pro Jahr. Des Weiteren gewährleistet der Teillastbereich mit einer geringen Anfangswindgeschwindigkeit von 3 m/s eine Stromversorgung durch eine erfindungsgemässe Vertikalwindkraftanlage auch schon bei Schwachwind.

Gemäss einer weiteren Ausführungsform ist vorgesehen, dass die konstante Schnelllaufzahl zwischen 2 und 2.6, vorzugsweise zwischen 2.2 und 2.4, höchst vorzugweise im Wesentlichen 2.3 beträgt. Ein derartiger Wertebereich für die konstante Schnelllaufzahl bewirkt relativ geringe Umdrehungszahlen des Rotors und daher relativ geringe Flügelgeschwindigkeiten. Somit kann eine erfindungsgemässe Vertikalwindkraftanlage wie schon oben genannt mit vorteilhaft geringen Umwelteinflüssen betrieben werden.

Gemäss einer weiteren Ausführungsform ist vorgesehen, dass die Vertikalwindkraftanlage dazu ausgestaltet ist, den Pitchwinkel so zu regeln, dass die Flügel in einem Nennbetriebsmodus der Vertikalwindkraftanlage mit einer variablen Schnelllaufzahl rotieren. Somit kann eine erfindungsgemässe Pitchregelung zu Leistungsbegrenzung einer erfindungsgemässen Vertikalwindkraftanlage beitragen.

Dies schont das Material einer erfindungsgemässen Vertikalwindkraftanlage und verringert somit ihren Verschleiss bzw. verlängert ihre Lebensdauer.

Gemäss einer weiteren Ausführungsform ist vorgesehen, dass die Vertikalwindkraftanlage dazu ausgestaltet ist, den Pitchwinkel so zu regeln, dass die Flügel im Nennbetriebsmodus mit einer im Wesentlichen konstanten Nenndrehzahl rotieren. Somit dreht der Rotor in einem Nenndrehzahlbereich. Dies hilft, Belastungsspitzen der Komponenten der Vertikalwindkraftanlage zu vermeiden und hilft daher weiter, das Material einer abschlussgemäss Vertikalwindkraftanlage zu schonen, Verschleiss zu verringern und Standzeiten zu erhöhen.

Gemäss einer weiteren Ausführungsform ist vorgesehen, dass bei einer ersten Abschaltwindgeschwindigkeit $v_3$ der Vertikalwindkraftanlage die variable Schnelllaufzahl $\lambda$ zwischen 1 und 1.8, vorzugsweise zwischen 1.3 und 1.5, höchst vorzugweise im Wesentlichen 1.38 beträgt. Die Abschaltwindgeschwindigkeit $v_3$ kann beispielsweise in einem Bereich von 20 m/s liegen. Insbesondere bei einer solchen relativ hohen Windgeschwindigkeit hilft der relativ niedrige Wertebereich der variablen Schnelllaufzahl, die Umfangsgeschwindigkeit der Flügel möglichst gering zu halten und damit eine sehr gute Umweltverträglichkeit einer erfindungsgemässen Vertikalwindkraftanlage zu gewährleisten.

Gemäss einer weiteren Ausführungsform ist vorgesehen, dass die Vertikalwindkraftanlage dazu ausgestaltet ist, den Pitchwinkel in einem Anlaufmodus so zu regeln, dass die Flügel von einem Widerstandslauf mit Schnelllaufzahlen $\lambda \leq 1$ ausgehend in einen Schnelllauf mit Schnelllaufzahlen $\lambda > 1$ übergehen. Somit kann insbesondere beim Anlaufen der Vertikalwindkraftanlage aus einem Rotorstillstand heraus die von den Flügeln auf Basis ihres Windwiderstandes aufgenommene Energie optimal genutzt und ein am Rotor anliegendes Anlaufdrehmoment maximiert werden. Sobald der Rotor eine gewisse Umdrehungsgeschwindigkeit erreicht hat kann ein fliessender Übergang zum Schnelllauf der Flügel bereitgestellt werden. Dies hilft, die Anlaufzeiten einer erfindungsgemässen Vertikalwindkraftanlage insgesamt zu verkürzen und daher die Energieausbeute zu erhöhen.

Gemäss einer weiteren Ausführungsform ist vorgesehen, dass die Regelung des Pitchwinkels auf wenigstens einer Kurvenscheibe basiert, die für eine gesamte Rotation des Rotors den Pitchwinkel im Wesentlichen kontinuierlich festlegt. Eine kontinuierliche Festlegung des Pitchwinkels ermöglicht eine möglichst sanfte, sprungfreie Steuerung und Regelung einer erfindungsgemässen Vertikalwindkraftanlage mit möglichst wenig Parametersprüngen, wie sie bei in groben diskreten Schritten vorgegebenen Pitchwinkeln auftreten können. Für verschiedene Windgeschwindigkeiten können verschiedene Kurvenscheiben vorgegeben werden. Jede der Kurvenscheiben kann bezüglich der jeweiligen Windgeschwindigkeit und den sich daraus an den Flügeln ergebenden Strömungsverhältnissen optimiert werden.

Gemäss einer weiteren Ausführungsform ist vorgesehen, dass ein maximaler Betrag des Pitchwinkels für luvseitige Positionen des Flügels im Allgemeinen grösser ist als für leeseitige Positionen des Flügels jeweils unter Bezug zur Rotordrehachse. Mit anderen Worten kann für Azimut-Winkel kleiner 180° der Pitchwinkel im Allgemeinen kleiner sein als für Azimut-Winkel zwischen 180 und 360°. Somit trägt die Pitchregelung den jeweiligen Strömungsverhältnissen an den Flügeln in Abhängigkeit von Azimut-Winkel Rechnung. Insbesondere werden somit leeseitig von Rotor und Flügeln selber verursachte Strömungseffekte, wie Turbulenzen und Wirbelschleppen, berücksichtigt, wodurch sich die Energieausbeute einer erfindungsgemässen Vertikalwindkraftanlage weiter verbessern lässt.

Gemäss einer weiteren Ausführungsform ist vorgesehen, dass für Windgeschwindigkeiten im Bereich einer Nennwindgeschwindigkeit bei einem von einer senkrecht zur Windrichtung stehenden Nulllinie aus gemessenen Azimut-Winkel von 0° der Pitchwinkel kleiner als null ist. Somit wird der Flügel also mit einem Pitchwinkel kleiner als 0° in den Wind gedreht bzw. bewegt sich von Lee nach Luv. Dies trägt zu einer verbesserten Dynamik einer erfindungsgemässen Vertikalwindkraftanlage und somit erhöhten Energieausbeute bei.

Gemäss einer weiteren Ausführungsform ist vorgesehen, dass zumindest für Windgeschwindigkeiten im Bereich der Nennwindgeschwindigkeit bei von einer senkrecht zur Windrichtung stehenden Nulllinie aus gemessenen Azimut-Winkel von 0° bis 90° ein lokales Maximum des Pitchwinkels vorliegt. Dies hilft, die am jeweiligen Flügel wirkenden Auftriebskräfte zu optimieren. Somit ist die Dynamik und die Energieausbeute einer erfindungsgemässen Windkraftanlage weiter verbessert.

Gemäss einer weiteren Ausführungsform weist die Vertikalwindkraftanlage wenigstens einen Windgeschwindigkeitssensor und/oder wenigstens einen Windrichtungssensor auf, der an wenigstens einem der Flügel angeordnet und signalübertragend mit einer Steuerreinrichtung zur Bestimmung eines Soll-Wertes des Pitchwinkels verbunden ist. Somit können Windgeschwindigkeit und/oder Windrichtung vorteilhafterweise am Flügel und als relevante Messgrössen somit möglichst nah an einer Regelstrecke zur Einstellung des Pitchwinkels ermittelt werden, die den Flügel und beispielsweise ein daran angebrachten bzw. in dessen Nähe angeordneten Pitchantrieb umfasst. Dies begünstigt eine möglichst präzise, fehlerfreie Pitchregelung.

Gemäss einer weiteren Ausführungsform ist vorgesehen, dass bei Windgeschwindigkeiten von Windstille bis zu einer weiteren Abschaltgeschwindigkeit der Vertikalwindkraftanlage ein Betrag eines Positionierungsfehlers bei der Regelung des Pitchwinkels im Wesentlichen stets kleiner als 5°, vorzugsweise kleiner als 3°, höchst vorzugsweise kleiner als 1.5° ist. Durch derart geringe Positionierungsfehler kann zum einen die Energieausbeute einer erfindungsgemässen Vertikalwindkraftanlage erhöht werden. Zum anderen lassen sich dadurch unerwünschte Fehlbelastungen sowie Vibrationen der Vertikalwindkraftanlage und Ähnliches minimieren, weil die Drehung der Flügel weitestgehend abweichungsfrei einem vorgegebenen Sollwert bzw. Soll-Pitchwinkel entspricht.

**Figurenbeschrieb**

Anhand der nachfolgenden Figuren werden Ausführungsbeispiele der Erfindung beschrieben. Es zeigen:

Fig. 1     eine schematische Perspektivansicht einer erfindungsgemässen Vertikalwindkraftanlage;

Fig. 2     eine schematische Seitenansicht einer erfindungsgemässen Vertikalwindkraftanlage;

Fig. 3     eine schematische Draufsicht einer erfindungsgemässen Vertikalwindkraftanlage;

Fig. 4    ein in Fig. 2 markiertes Detail IV eines Flügels einer erfindungsgemässen Vertikalwindkraftanlage;

Fig. 5    ein in Fig. 4 markiertes Detail V eines Flügels einer erfindungsgemässen Vertikalwindkraftanlage mit einem erfindungsgemässen Pitchmotor in einer schematischen Querschnittsansicht entlang einer Drehachse des Flügels;

Fig. 6    eine schematische Perspektivansicht aerodynamisch verkleideter Pitchmotoren einer erfindungsgemässen Vertikalwindkraftanlage;

Fig. 7    eine schematische Perspektivansicht eines Pitchmotors samt daran angebrachten Flügel, insbesondere eines Motorflansches des Pitchmotors zur Befestigung des Pitchmotors samt Flügel an einem Arm eines Rotors einer erfindungsgemässen Vertikalwindkraftanlage;

Fig. 8    eine schematische Teilquerschnittsansicht eines erfindungsgemässen Pitchmotors;

Fig. 9    eine schematische Querschnittsansicht eines Antriebsstranges einer erfindungsgemässen Vertikalwindkraftanlage entlang einer Antriebswelle des Antriebsstranges;

Fig. 10   eine schematische Perspektivansicht einer ersten erfindungsgemässen Ausführungsform einer Nabenanbindung einer erfindungsgemässen Vertikalwindkraftanlage;

Fig. 11   eine schematische Vorderansicht eines Abschnittes eines Armes eines Rotors einer erfindungsgemässen Vertikalwindkraftanlage;

Fig. 12   eine schematische Seitenansicht des in Fig. 11 gezeigten Abschnittes eines Armes eines Rotors einer erfindungsgemässen Vertikalwindkraftanlage;

Fig. 13   eine schematische Querschnittsansicht des in Fig. 11 und 12 gezeigten Abschnittes eines Armes eines Rotors einer erfindungsgemässen Vertikalwindkraftanlage entlang der in Fig. 12 dargestellten Schnittlinie A-A;

Fig. 14   eine schematische Draufsicht des in Fig. 11 bis 13 gezeigten Abschnittes eines Armes eines Rotors einer erfindungsgemässen Vertikalwindkraftanlage;

Fig. 15   eine schematische Draufsicht einer erfindungsgemässen Vertikalwindkraftanlage im Betrieb zur Illustration von Winkelpositionen und Kräfteverhältnissen an Flügeln der Vertikalwindkraftanlage;

Fig. 16   ein schematisches Diagramm zur Darstellung der Funktionsweise einer erfindungsgemässen Steuereinrichtung einer erfindungsgemässen Vertikalwindkraftanlage;

Fig. 17   ein schematisches Diagramm mit einer beispielhaften Drehmoment-Kennlinie eines erfindungsgemässen Pitchmotors für eine erfindungsgemässe Vertikalwindkraftanlage;

Fig. 18   ein schematisches Diagramm mit beispielhaften Kurvenscheiben zur Steuerung eines Pitchmotors für eine erfindungsgemässe Vertikalwindkraftanlage;

Fig. 19   eine schematische Perspektivansicht eines Prüfstandes zur Ermittlung eines Positionierungsfehlers eines Pitchmotors einer erfindungsgemässen Vertikalwindkraftanlage;

Fig. 20   ein schematisches Diagramm eines mittels des in Fig. 19 gezeigten Prüfstandes ermittelten Positionierungsfehlers eines erfindungsgemässen Pitchmotors über eine Vielzahl von Regelungszyklen;

Fig. 21   ein schematisches Diagramm eines Positionierungsfehlers eines erfindungsgemässen Pitchmotors über einen Regelungszyklus bei einer; und

Fig. 22   ein schematisches Diagramm eines Positionierungsfehlers eines erfindungsgemässen Pitchmotors über einen Regelungszyklus bei einer Abschaltwindgeschwindigkeit.

**Ausführung der Erfindung**

Zum besseren Verständnis der vorliegenden Erfindung wird nachfolgend auf die Zeichnungen Bezug genommen. Diese zeigen lediglich Ausführungsbeispiele des Erfindungsgegenstandes, wobei Merkmale, wie oben beschrieben, entsprechend jeweiliger Anforderungen beliebig miteinander kombiniert oder auch weggelassen werden können.

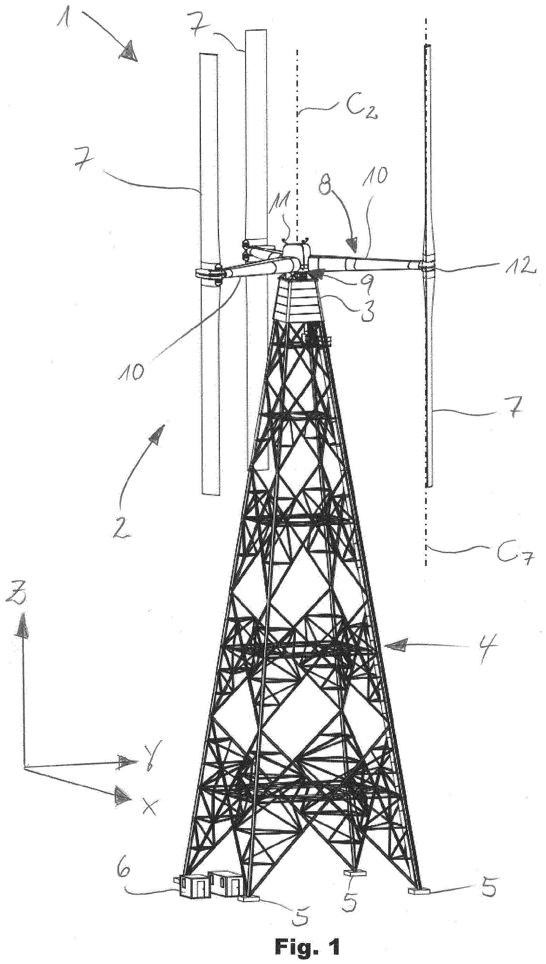

Fig. 1 zeigt eine schematische Perspektivansicht einer erfindungsgemässen Vertikalwindkraftanlage 1. Die Vertikalwindkraftanlage 1 erstreckt sich entlang einer Längsrichtung X, einer Querrichtung Y und einer Höhenrichtung Z, die gemeinsam ein kartesisches Koordinatensystem aufspannen. Die Vertikalwindkraftanlage 1 umfasst einen Rotor 2, ein Maschinenhaus 3, ein Turmsystem 4, Fundamente 5 und einen containerartigen Schaltschrank 6.

Der Rotor 2 umfasst eine Vielzahl vertikaler Flügel 7, die über eine Flügelaufhängung 8 an einer Rotornabe 9 befestigt sind, die um eine vertikal ausgerichtete, also parallel zur Höhenrichtung Z verlaufende Rotordrehachse $C_2$ drehbar im Maschinenhaus 3 gelagert ist. Die Flügelaufhängung 8 umfasst Rotorarme 10, welche sich zwischen den Flügeln 7 und der Rotornabe 9 erstrecken. Eine Signal-und/oder Messanordnung 11 ist auf der Rotornabe 9 konzentrisch zur Rotordrehachse $C_2$ angeordnet.

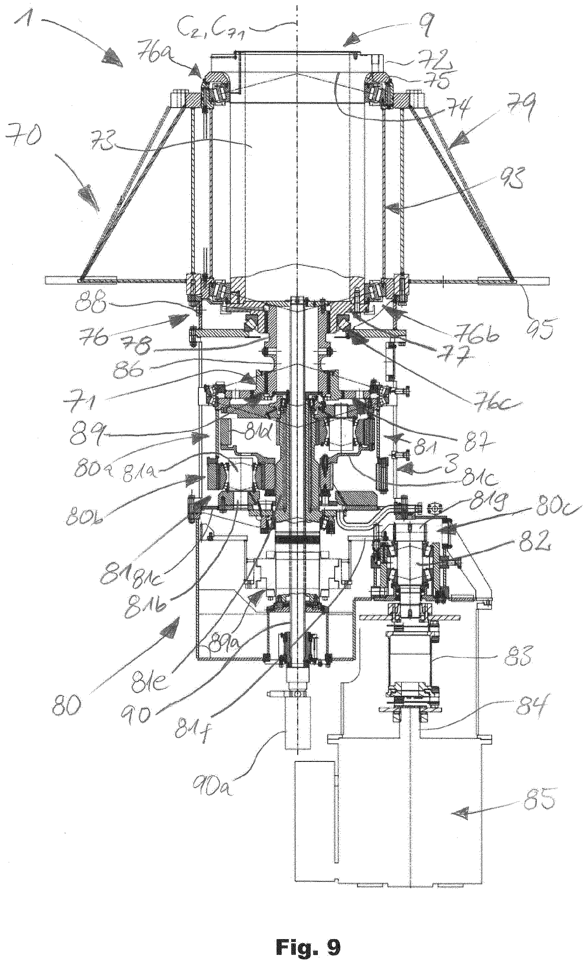

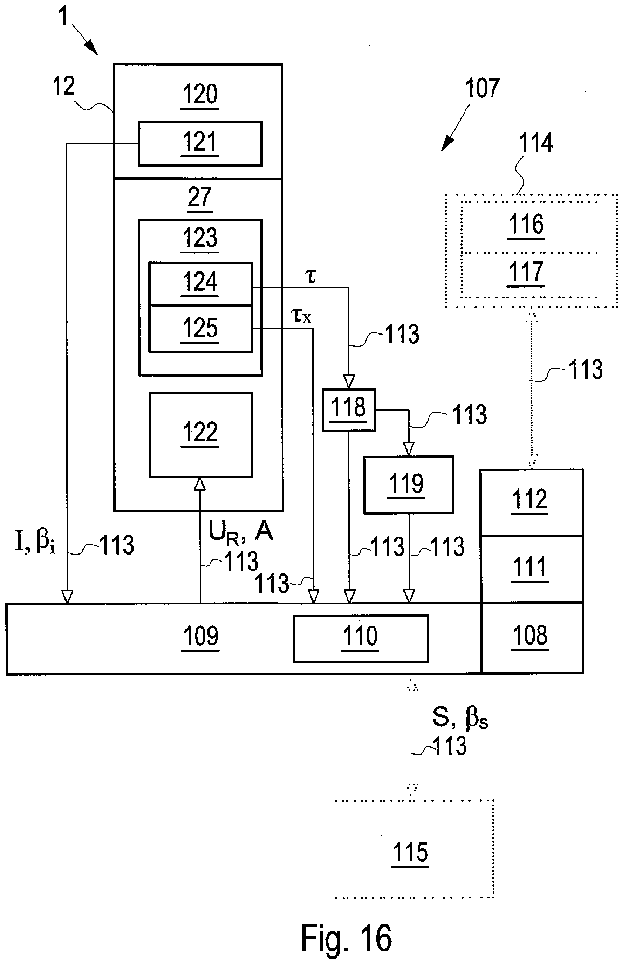

Das Maschinenhaus 3 ist in der Regel zuoberst auf dem Turmsystem 4 angeordnet, schalldämmend verkleidet und beinhaltet einen Antriebsstrang (Generator, Rotorlagerung, Getriebe, mechanische Bremse sowie Kühl-und Schmiersystem, siehe Fig. 9) der Vertikalwindkraftanlage 1. Das Turmsystem 4 ist vorzugsweise als Gittermastturm ausgestaltet. Bei den Fundamenten 5 handelt es sich vorzugsweise um Betonfundamente, welche die Last des Turmsystems 4 samt Maschinenhaus 3 und Rotor 2 aufnehmen. Weitere Komponenten, wie beispielsweise elektrische Umformer, Schaltkomponenten und eine Steuerungseinrichtung (siehe Fig. 16) der Vertikalwindkraftanlage 1 sind vorzugsweise im Schaltschrank 6 untergebracht.

Die Flügel 7 sind um eine Flügeldrehachse $C_7$ drehbar gelagert, die ebenfalls im Wesentlichen parallel zur Höhenrichtung Z verläuft. Zum Drehen der Flügel 7 um ihre jeweilige Flügeldrehachse $C_7$ sind sie jeweils mit mindestens einem Pitchantrieb 12 versehen. Wenigstens einer der Rotorarme 10 ist mit dem Pitchantrieb 12 verbunden, der somit eine Last des Flügels 7 aufnehmen helfen kann.

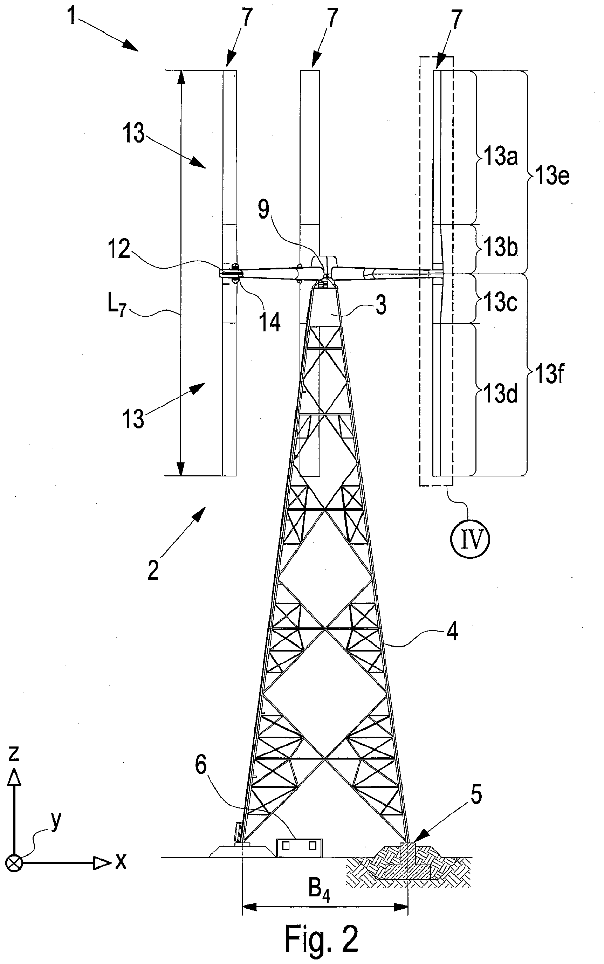

Fig. 2 zeigt die Vertikalwindkraftanlage 1 in einer schematischen Vorderansicht. Hier wird deutlich, dass die Flügel 7 mehrere Flügelabschnitte 13 umfassen, nämlich einen oberen Endabschnitt 13a einen oberen Mittelabschnitt 13b einen unteren Mittelabschnitt 13c und einen unteren Endabschnitt 13d. Oberer Endabschnitt 13a und oberer Mittelabschnitt 13b bilden zusammen einen oberen Flügelabschnitt 13e. Unterer Mittelabschnitt 13c und unter Endabschnitt 13d bilden zusammen einen unteren Flügelabschnitt 13f. Der Pitchantrieb 12 ist zwischen dem oberen Mittelabschnitt 13b und dem unteren Mittelabschnitt 13c bzw. zwischen dem oberen Flügelabschnitt 13e und dem unteren Flügelabschnitt 13f angeordnet. Zwischen dem oberen Endabschnitt 13a und dem mittleren Endabschnitt 13b sowie zwischen dem unteren Mittelabschnitt 13c und dem unteren Endabschnitt 13d ist jeweils eine Querschnittsveränderung eines Profils der Flügel 7 vorgesehen.

An Lagerpunkten 14 zwischen dem oberen Flügelabschnitt 13e und dem unteren Flügelabschnitt 13f sind die Flügel 7 jeweils durch einen der Arme 10 mit der Rotornabe 9 verbunden, der zur Übertragung radial und axial zur Rotordrehachse $C_2$ wirkender Kräfte ausgestaltet ist, die folglich im Wesentlichen in einer horizontalen, parallel zur Längsrichtung X und Querrichtung Y aufgespannten Ebene bzw. entlang der Höhenrichtung Z wirken. Am Pitchantrieb 12 werden zwischen dem oberen Mittelabschnitt 13b und dem unteren Mittelabschnitt 13c der Flügel 7 sowohl radial als auch parallel zur Rotordrehachse $C_2$ wirkende Kräfte aufgenommen. Folglich ist die gesamte Gewichtslast des Rotors 2 am Pitchantrieb 12 aufgenommen.

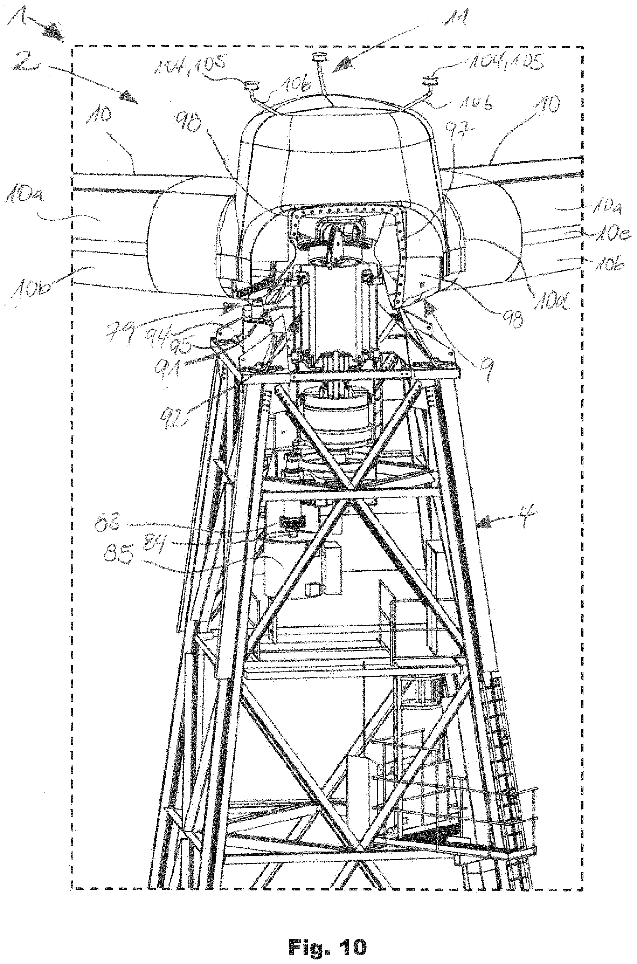

Ferner ist in Fig. 2 verdeutlicht, dass die Rotornabe 9 und das Turmsystem 4 jeweils als Gitterrohrstruktur ausgeführt sind. Am Kopf des als Gittermastturm ausgestalteten Turmsystems 4 verjüngt sich dieses in Richtung zum Maschinenhaus 3 hin und nimmt dort die gesamten vom Rotor 2 hervorgerufenen statischen und dynamischen Lasten auf. Am Fuss des Turmsystems 4 werden die Lasten über die Fundamente 5 in den Boden eingeführt. Das Maschinenhaus 3 ist über einen Leiteraufstieg zugänglich (s. Fig. 10).

Eine parallel zur Längsrichtung X gemessene maximale Breite $B_4$ des Turmsystems 4 an den Fundamenten 5 beträgt beispielsweise 22 m. Eine parallel zur Höhenrichtung Z gemessene Länge $L_7$ der Flügel 7 beträgt beispielsweise 54 m. Eine inklusive einer über den Boden hinaus ragenden Höhe der Fundamente gemessene Gesamthöhe der Vertikalwindkraftanlage 1 beträgt ohne Signal- und/oder Messmast 11 beispielsweise 105 m.

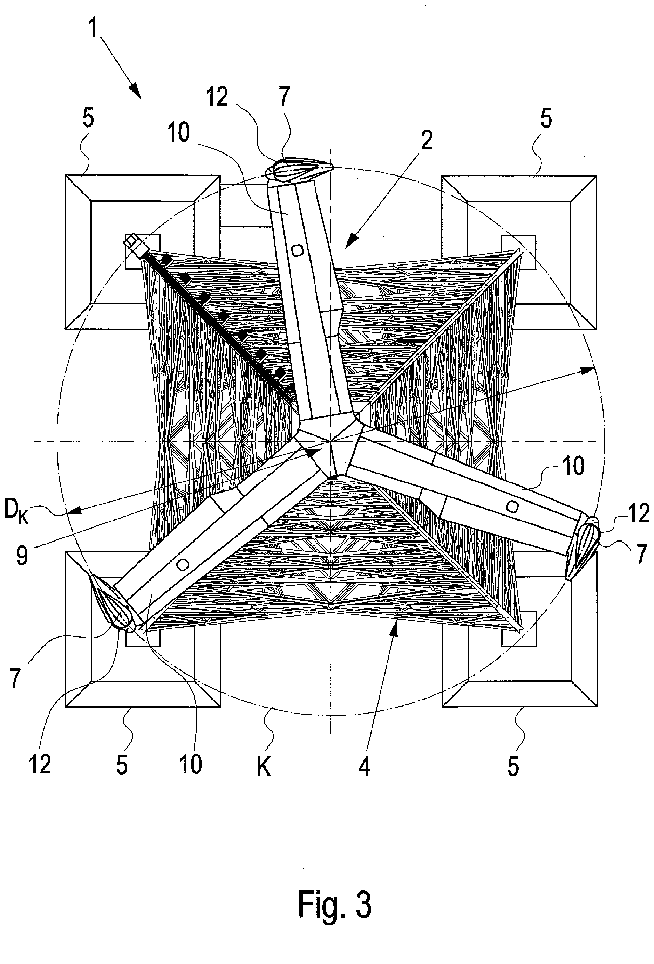

Fig. 3 zeigt die Vertikalwindkraftanlage 1 in einer schematischen Draufsicht. Hier wird deutlich, dass die Flügel 7 ein Flügelprofil aufweisen und sich auf einer Kreisbahn K um die Rotordrehachse $C_2$ bewegen. Ein Durchmesser $D_K$ Kreisbahn K beträgt beispielsweise 32 m und entspricht in etwa einem Maximaldurchmesser des Turmsystems 4.

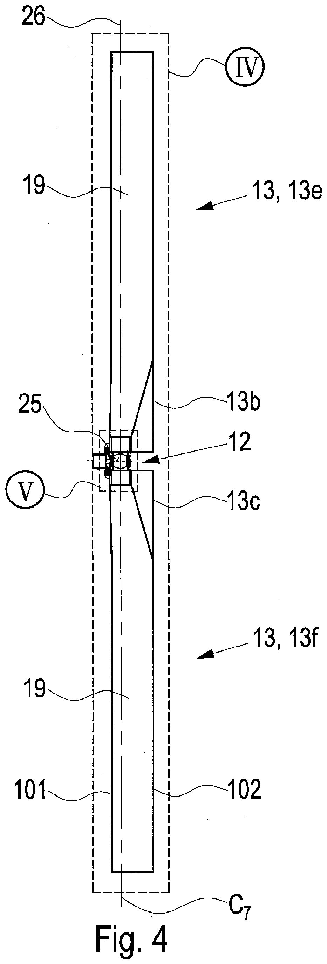

Fig. 4 ein in Fig. 2 markiertes Detail IV eines der Flügel 7 der Vertikalwindkraftanlage 1. der Flügel 7 besitzt Flügelblätter 19 Zwischen dem oberen Mittelabschnitt 13b und dem unteren Mittelabschnitt 13c bzw. zwischen oberen Flügelabschnitt 13e und unterem Flügelabschnitt 13f ist der Flügel 7 im Pitchantrieb 12 an einer Motorwelle 25 des Pitchantriebs 12 gelagert. Gemeinsam mit der Motorwelle 25 bilden die Flügelblätter 19 eine den Flügel 7 in seiner Gesamtlänge durchziehende Flügelachse 26 aus, um welche die Flügelblätter 19 drehbar beweglich gehalten sind.

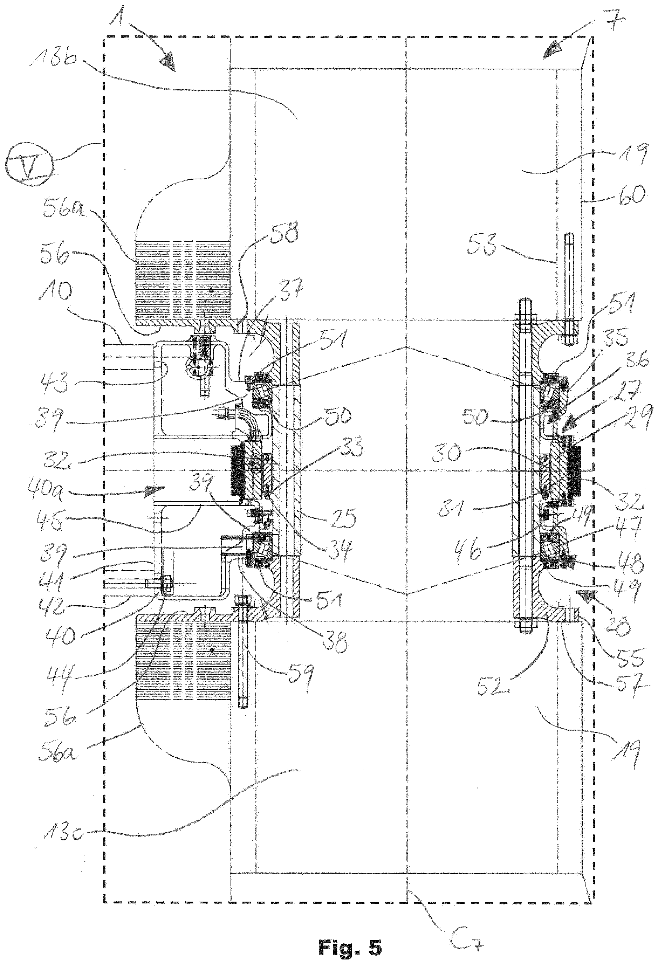

Beispielsweise können die Flügelblätter 19 in Schalenbauweise hergestellt sein. Die Flügelblätter 19 besitzen dazu einen Flügelblattachsabschnitt und eine Aussenhaut zur Aufnahme von Normal-, Biege-und Torsionskräften sowie Drehmomenten (siehe Fig. 5).

Fig. 5 zeigt ein in Fig. 4 markiertes Detail V des Flügels 7 mit dem Pitchantrieb 12 in einer schematischen Querschnittsansicht entlang der Flügeldrehachse $C_7$. Der Pitchantrieb 12 besitzt einen Pitchmotor 27, der in einem Zwischenraum 28 zwischen dem oberen Mittelabschnitt 13b und dem unteren Mittelabschnitt 13c des Flügels 7 angeordnet ist. Der Pitchmotor 27 ist als elektronisch gesteuerter getriebeloser luftgekühlter Torquemotor ausgestaltet und besitzt einen Statorring 29 sowie einen vom Statorring 29 umfangsseitig umgebenden und davon über einen Spalt beabstandeten Rotorring 30. An einer Aussenumfangsfläche des Statorrings 29 ist ein Kühlkörper 31 mit Kühlrippen 32 befestigt, um Abwärme des Pitchmotors 27 ableiten zu können.

Der Rotorring 30 des Pitchmotors 27 ist an einer als ein Art Kranz einstückig mit der Motorwelle 25 ausgeformten Felge 33 montiert, an welcher der Rotorring 30 mit Hilfe von Befestigungselementen34 in Form von Schraubenbolzen drehfest mit der im Wesentlichen zylindrischen Motorwelle 25 verbunden ist. Der Rotorring 30 erstreckt sich im Wesentlichen aussenumfangsseitig entlang der Motorwelle 25 und ist allenfalls durch einen geringen Spalt radial von der Motorwelle 25 beabstandet angeordnet. Über die Felge 34 wird ein zwischen Statorring 29 und Rotorring 30 elektromagnetisch erzeugtes und um die Flügeldrehachse $C_7$ herum wirkendes Antriebsmoment des Pitchmotors 27 vom Rotorring 30 auf die Motorwelle 25 übertragen.

Ein Motorgehäuse 35 des Pitchmotors 27 bildet einen Motorinnenraum 36, in welchem der Rotorring 30 aufgenommen ist. Das Motorgehäuse 35 besitzt eine Decke 37 und einen Boden 38, die sich scheibenförmig entlang und im Wesentlichen parallel zu den Felgen 33 erstrecken. Innenumfangsseitig sind Decke 37 und Boden 38 jeweils mit einem Lagersitz 39 verbunden. Decke 37 und Boden 38 sind über Wandungen des Motorgehäuses 35 mit Statorring 29 und Kühlkörper 31 sowie an einer zum den Flügel 7 tragenden Rotorarm 10 hin weisenden Seite des Pitchmotors 27 mit einem Motorflansch 40 des Pitchantriebs 12 verbunden.

Der Motorflansch 40 bildet Stirnflächen 41 aus, an denen der Rotorarm 10 über einen am Rotorarm 10 angebrachten Aufhängungskranz 42 mit dem Motorflansch 40 verbunden ist. Der Aufhängungskranz 42 bildet eine Gegenstirnfläche 43 aus, die radial von der Rotordrehachse $C_2$ weg in Richtung zur Kreisbahn K der Flügel 7 hin weist. Motorflansch 40 und Aufhängungskranz 42 sind mittels Verbindungselementen 44 miteinander verbunden, die vorzugsweise als wieder lösbare Verbindungselemente 44, wie beispielsweise Schrauben-Bolzenverbindungen ausgeführt sind. Zwischen den Stirnflächen 41 des Motorflansches 40 ist ein Freiraum 40a angeordnet, um im Bereich der Kühlrippen 32 ausreichend Platz zur Wärmeabfuhr bereitzustellen bzw. um einen Wärmestau zu verhindern.

Zwischen Lagersitz 39 und Motorflansch 40 erstrecken sich Versteifungslamellen 45, um die vom Lagersitz 39 aus über das Motorgehäuse 35 auf den Motorflansch 40 übertragenen vom Flügel 7 ausgehenden statischen und dynamischen Belastungen möglichst ohne Verwindung des Motorgehäuses 35 auf den Motorflansch 40 übertragen zu können. Die Versteifungslamellen 45 sind jeweils vorteilhafterweise einstückig mit dem Motorgehäuse 35 ausgeformt, beispielsweise während des Giessens und/oder durch verschweissen, mit Decke 37, Boden 38, Lagersitz 39 und Motorflansch 40 bzw. Decke 37, Boden 38 und Lagersitz 39 verbunden, wobei sie sich stegartig von Decke 37 und Boden 38 weg erstrecken. Neben ihrer Versteifungswirkung tragen die Versteifungslamellen 45 zusätzlich zur Kühlung des Pitchmotors 37 durch Wärmeabgabe über das Motorgehäuse 35 bei.

In der Wandung des Motorgehäuses ist wenigstens ein Sensorelement 46 angeordnet, beispielsweise in Form eines Induktionsfühlers, um zur Steuerung bzw. Regelung der Vertikalwindkraftanlage 1 eine Drehposition der Motorwelle 25 und somit des Flügels 7 zu erfassen. Zwischen den beiden Lagersitzen 39 und der Motorwelle 25 ist jeweils ein Motorlager 47 angeordnet. Die Motorlager 47 sind beispielsweise als Pendelrollenlager ausgeführt. Sie übertragen hohe Radialkräfte aus den Flügeln 7 auf die Rotorarme10 und versteifen zusätzlich den gesamten Rotor 2. Um die Motorlager 47 vor schädlichen Umwelteinflüssen zu schützen, sind die Motorlager 47 jeweils in einem Lageraufnahmeraum 48 aufgenommen, der durch Dichtelemente 49 weitestgehend hermetisch abgeschlossen ist.

Die Dichtelemente 49 dichten den Lageraufnahmeraum 48 sowohl gegenüber dem Motorinnenraum 36 als auch einer Umgebung der Vertikalwindkraftanlage 1 ab. Zum Motorinnenraum 36 hin ist der Lageraufnahmeraum 48 durch innere Ringe 50 verschlossen, die in axialer Richtung des Flügels 7 in bzw. entgegen der Höhenrichtung Z jeweils am Motorlager 47 sowie aussenumfangsseitig am Dichtelement 49 anliegend den Lageraufnahmeraum 48 gegenüber dem Motorinnenraum 36 abgrenzen. Gegenüber der Umgebung der Vertikalwindkraftanlage 1 ist der Lageraufnahmeraum 48 durch äussere Ringe 51 verschlossen, die jeweils aussen am Lagersitz 39 anliegen und innenumfangsseitig das Dichtelement 49 umschliessen.

An ihren zu den Flügelblättern 19 hin weisenden Enden ist die Motorwelle 25 mit einem Übergangsabschnitt 52 verbunden bzw. geht einstückig in diesen über. Der Übergangsabschnitt 52 weitet sich vom Pitchantrieb 12 weg verlaufend und ist in einem Flügelblattachsabschnitt 53 montiert, der den Übergangsabschnitt 52 adapterartig mit dem Flügel 7 drehfest verbindet. Dazu sind in Richtung entlang der Flügeldrehachse $C_7$ weisende Verbindungsenden 55 des Übergangsabschnittes 52 flanschartig ausgeformt und zusätzlich mit einer Ausgleichsgewichtshalterung 56 zum Halten eines Ausgleichsgewichts 56a für das Flügelblatt 19 versehen, sodass sie axial von den Verbindungsenden 55 wegweisende Flanschabschnitte 57 aufweisen, an denen Formschlusselemente 58 und weitere Verbindungselemente 59, beispielsweise ebenfalls wieder lösbar in Form von Schrauben-Bolzenverbindungen, vorgesehen sind, die einen Form- und/oder Kraftschluss zwischen dem Übergangsabschnitt bzw. dessen Flanschabschnitt 57 und dem jeweiligen Flügelblattachsabschnitt 53 herstellen. Motorwelle 25, Übergangsabschnitt 52 und Flügelblattachsabschnitt 53 verlaufen koaxial zueinander. Der Flügelblattachsabschnitt 53 trägt eine Aussenhaut 60 des Flügels 7.

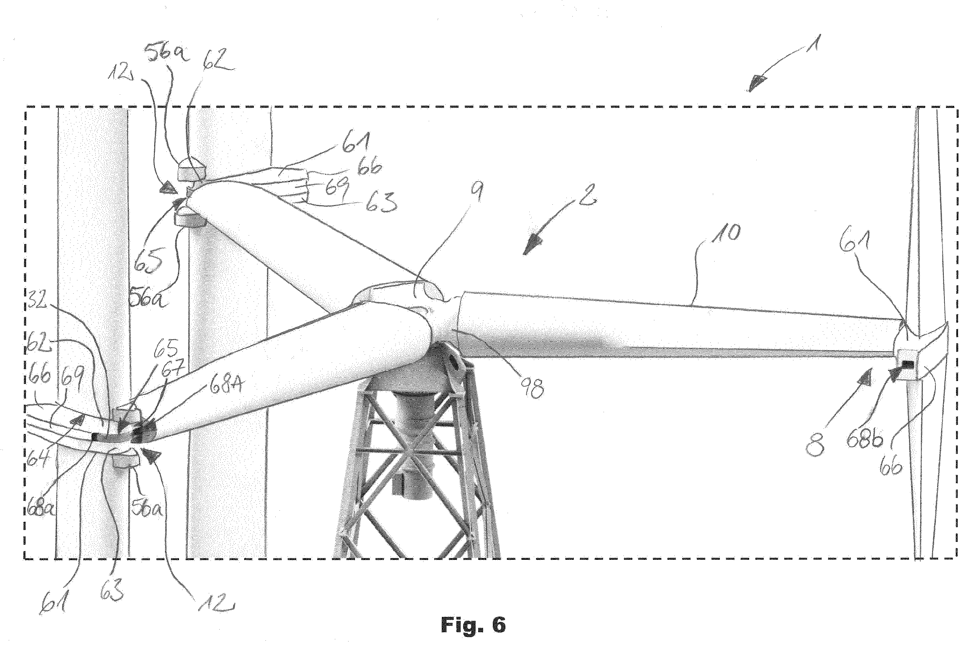

Fig. 6 zeigt eine schematische Perspektivansicht der Pitchantriebe 12, in welcher der Pitchmotor 27 mit einer aerodynamischen Verkleidung in Form einer Verschalung 61 versehen ist. Die Verschalung 61 weist eine Oberschale 62 und eine Unterschale 63 auf, die das Motorgehäuse 35 des Pitchmotors 27 haubenartig umschliessen und daher Decke 37 und Boden 38 samt Versteifungslamellen 45 und Stützlamellen 46 sowie Motorflansch 40 abdecken, wodurch ein zwischen Pitchantrieb 12 und Flügel 7 gebildeter Antriebsspalt 64 und somit an diesem auftretende Druck- und damit verbundene Ertragsverluste möglichst gering gehalten werden. Zwischen Oberschale 62 und Unterschale 63 ist eine ringspaltförmige Kühlöffnung 65 gebildet, welche den Kühlkörper 31 axial umschliesst und durch welche die Kühlrippen 32 hindurch freiliegen, sodass sie von Umgebungsluft umströmt ungehindert die Abwärme des Pitchmotor 27 an die Umgebung der Vertikalwindkraftanlage 1 abgeben können.

Der Antriebsspalt 64 wird weiter verringert, indem die Verschalung 61 einen nach aerodynamischen Aspekten ausgeformten Fortsatz 66 ausbildet, der sich an Oberschale 62 und Unterschale 63 anschliesst und dessen Aussenkontur in einer Projektion entlang der Flügeldrehachse $C_7$ im Wesentlichen einem Flügelprofil der Flügel 7 entspricht. Zum Rotorarm 10 hin bildet die Verschalung 61 Abschlussstücke 67 aus, die bündig am Motorflansch 40 anliegen, dessen Aussendurchmesser zumindest abschnittsweise an einen Aussendurchmesser des Aufhängungskranzes 42 angepasst ist. Eine Aussenkontur des Aufhängungskranzes 42 ist wiederum an eine Aussenkontur des Rotorarms 10 angepasst. Somit gehen Abschlussstücke 67, Motorflansch 40, Verbindungsflansch 42 und Rotorarm 10 mit weitestgehend miteinander fluchtenden Aussenkonturen ineinander über und es besteht ein aerodynamisch vorteilhafter Übergang zwischen Pitchantrieb 12 und Flügelaufhängung 8.

Des Weiteren ist in Fig. 6 dargestellt, dass in der Verschalung 61 des Pitchantriebs 12 wenigstens ein Ansaugstutzen 68a bzw. eine Ansaugöffnung und eine Ablassöffnung 68b ausgeformt sind. Zwischen Ansaugstutzen 68a und Ablassöffnung 68b ist ein Kühlluftkanal 69 in der Verschalung 61 ausgeformt bzw. zwischen Verschalung 61 und Pitchantrieb 12 gebildet. Die am Ansaugstutzen 68a ausgebildete Ansaugöffnung weist in Umfangsrichtung entlang der Kreisbahn K, sodass während der Drehung des Rotors 2 der Ansaugstutzen 68a Umgebungsluft aufnimmt und diese durch den Kühlluftkanal 69 entlang des Kühlkörpers 31 bzw. dessen Kühlrippen 32 zur Ablassöffnung 68b hin geleitet wird. Somit werden Strömung ab zu der Kühlluft im Bereich des Kühlkörpers 31 bzw. dessen Kühlrippen 32 vermieden, was dabei hilft, eine den jeweiligen Anforderungen entsprechende Kühlung des Pitchantrieb 12 zu gewährleisten. Weiterhin vorteilhafterweise sind zwei Ansaugstutzen 68a und eine Ablassöffnung 68b vorgesehen, wobei ein gemeinsamer Querschnitt der Ansaugstutzen 68a grösser ist als ein Querschnitt der Ablassöffnung 68b, wodurch die Kühlluft entlang der jeweils zwischen Ansaugstutzen 68a und Ablassöffnung 68b gebildeten beiden Kühlluftkanäle 69 pro Pitchantrieb 12 tendenziell eine leichte Kompression und daher Beschleunigung erfährt, was dabei hilft, eine Kühlleistung der Kühlluft weiter zu steigern.

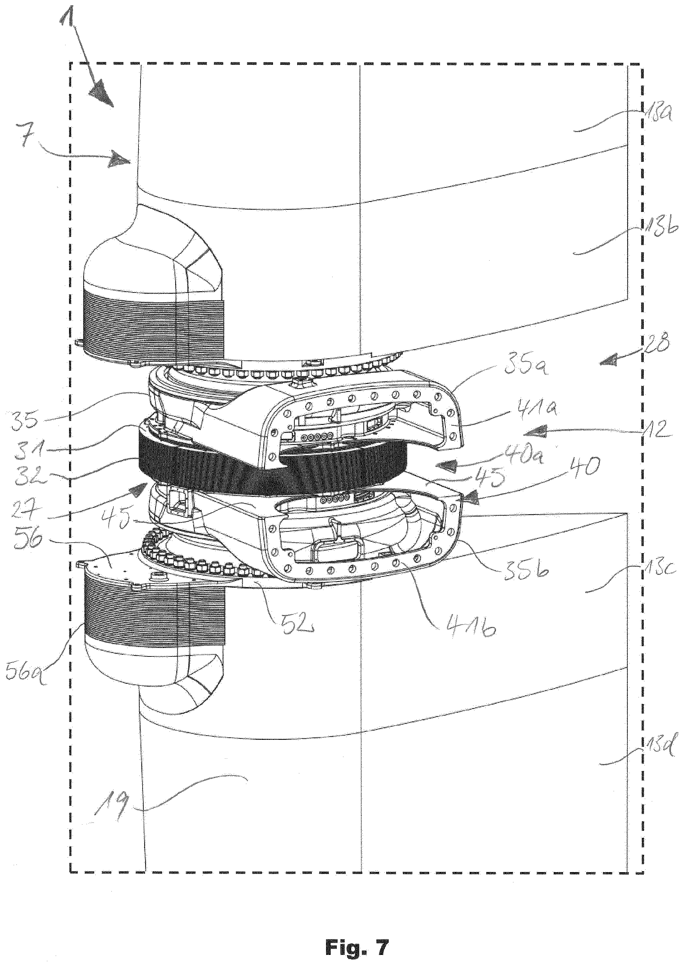

Fig. 7 zeigt eine schematische Perspektivansicht eines Pitchmotors 27 samt daran angebrachtem Flügel 7, insbesondere des Motorflansches 40 des Pitchmotors 27 zur Befestigung des Pitchmotors 27 samt Flügel 7 an einem der Rotorarme 10 des Rotors 2 der Vertikalwindkraftanlage 1. hier wird deutlich, dass der Freiraum 40a am Motorflansch 40 zwischen einer oberen Gehäusehälfte 35a und einer unteren Gehäusehälfte 35b des Motorgehäuses 35 gebildet ist. Damit besitzt der Motorflansch 40 eine obere Flanschhälfte 41a und eine untere Flanschhälfte 41b, zwischen denen der Pitchmotor 27 vom jeweiligen Rotorarm 10 aus zugänglich ist und zwischen denen Kühlluft entlang des Kühlkörpers 31 strömen kann. Die Versteifungslamellen 45 am Motorgehäuse 35 bewirken jeweils eine Stabilisierung der oberen Gehäusehälfte 35a unter unteren Gehäusehälfte 35b für sich genommen, um deren ausreichende Steifigkeit zu gewährleisten.

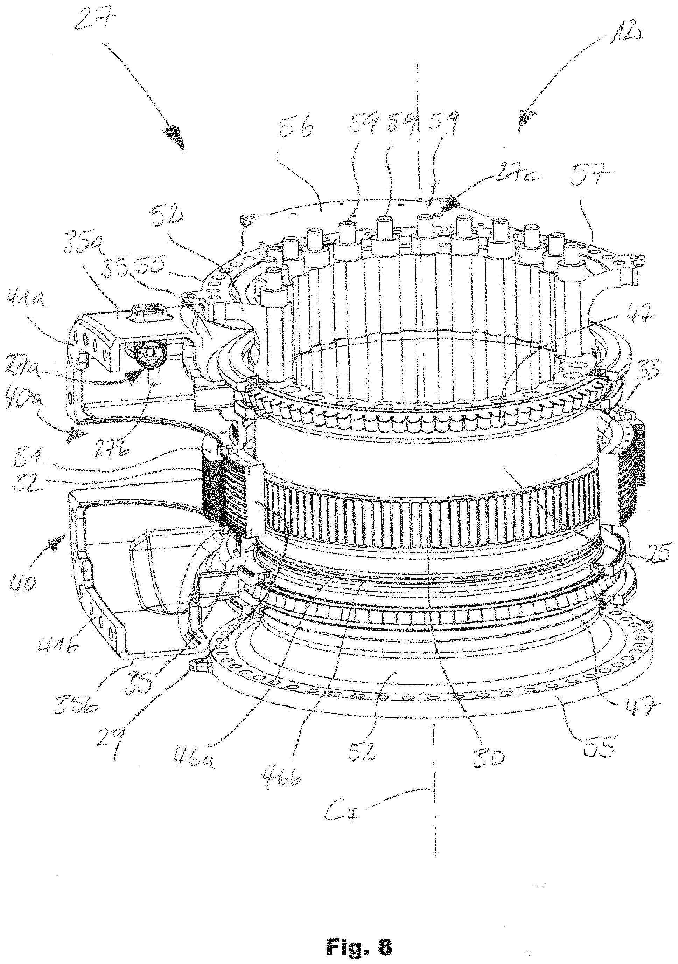

Fig. 8 zeigt eine schematische Teilquerschnittsansicht des Pitchmotors 27. Um eine Arretierung des Pitchmotors 27 und somit eine Sicherung des Flügels 7 gegen Rotationen um seine Flügeldrehachse $C_7$ vornehmen zu können ist der Pitchantrieb 12 mit einer am Motorgehäuse 35 angeordneten Motorbrems- und/oder -blockiereinrichtung 27a versehen, die über den Motorflansch 40 zugänglich und manuell betätigbar ist. Beispielsweise ist die Motorbrems- und/oder -blockiereinrichtung 27a dazu ausgestaltet, formschlüssig mit der Ausgleichsgewichtshalterung 56 zusammenzuwirken, beispielsweise indem ein Feststellbolzen 27b der Motorbrems- und/oder - blockiereinrichtung 27a in eine entsprechende Feststellenöffnung 27c der Ausgleichsgewichtshalterung formschlüssig eingreift, damit durch wenigstens eine in Rota- tionsrichtung um die Flügeldrehachse $C_7$ herum wirkende Verriegelung der Motorwelle 25 gegenüber dem Motorgehäuse 35 zu Wartungs- und/oder Sicherungszwecken jegliche Rotation des Pitchmotors 27 und somit des Flügels 7 um die Flügeldrehachse $C_7$ herum unterbunden ist.

Des Weiteren erstrecken sich parallel zueinander verlaufend ein erster Drehgeber 46a und ein zweiter Drehgeber 46b entlang des Aussenumfanges der Motorwelle 25 und sind dazu ausgestaltet, vom wenigstens einen Sensorelement 46 erfasst zu werden. Der erste Drehgeber 46a ist beispielsweise als Absolutpositionsgeber ausgestaltet. Der zweite Drehgeber 46b es beispielsweise als Relativpositionsgeber ausgestaltet. Der als Absolutpositionsgeber ausgestaltete erste Drehgeber 46a kann beispielsweise zumindest teilweise in unregelmässigen Abständen voneinander entlang des Aussenumfanges der Motorwelle 25 angeordnete Inkremente besitzen. Der als Relativpositionsgeber ausgestaltete zweite Drehgeber 46b kann beispielsweise in regelmässigen Abständen voneinander entlang des Aussenumfangs der Motorwelle 25 angeordnete Inkremente besitzen. Somit erlaubt der erste Drehgeber 46a die Bestimmung einer Absolutposition der Motorwelle 25 und somit des Flügels 7 um die Flügeldrehachse $C_7$ herum. Der zweite Drehgeber 46 erlaubt die Bestimmung einer Relativposition der Motorwelle 25 und somit des Flügels 7 um die Flügeldrehachse $C_7$ herum. Eine derartige Verwendung des ersten Drehgebers 46a und des zweiten Drehgebers 46b ermöglicht es, mit hoher Positionsauflösung die Rotationsposition der Motorwelle 25 und des Flügels 7 zu bestimmen.

Fig. 9 zeigt eine schematische Querschnittsansicht eines Antriebsstranges 70 der Vertikalwindkraftanlage 1 entlang einer Antriebswelle 71 des Antriebsstranges 70, deren Antriebsdrehachse $C_{71}$ koaxial zur Rotordrehachse $C_2$ verläuft. Die Rotornabe 9 besitzt einen Sockel 72, der einen Zapfen 73 ausbildet, welcher ebenfalls koaxial zu Antriebsdrehachse $C_{71}$ und Rotordrehachse $C_2$ verläuft. Dort wo sich der Sockel 72 zum Zapfen 73 in verjüngt ist eine entgegen der Höhenrichtung Z weisende Nabenschulter 74 am Sockel 72 ausgebildet, die auf einem Übergangsring 75 aufliegt, der seinerseits auf einem einen Teil einer Rotorlagerung 76 ausbildenden ersten Rotorlager 76a axial entgegen der Höhenrichtung Z aufliegt.

Die Rotorlagerung 76 umfasst neben dem ersten Rotorlager 76a noch ein zweites Rotorlager 76b und ein drittes Rotorlager 76c. Erstes und zweites Rotorlager 76a, 76b sind beispielsweise als vorgespannte Kegelrollenlager ausgeführt und übertragen aus Windlasten resultierende Radialkräfte in das Turmsystem 4. Dazu sind erstes und zweites Rotorlager 76a, 76b durch eine separate Lagerbuchse 77 auf einer Rotorwelle 78 verspannt. Der das erste und zweite Rotorlager 76a, 76b umfassende Teil der Rotorlagerung 76 ist axial frei schwimmend in eine einen Maschinenträger bildende Nabenanbindung 79 gefügt und bleibt somit frei von vertikalen Lasten. Das dritte Rotorlager 76c nimmt die vertikalen Lasten des Rotors 2 und somit im Wesentlichen dessen Gewichtskraft auf und ist dazu vorteilhafterweise als Axial-Pendelrollenlager ausgeführt, das die vertikalen Lasten direkt in das Maschinenhaus 3 einleitet.

Unterhalb des Maschinenhauses 3 schliesst ist ein Getriebe 80 der Vertikalwindkraftanlage 1 angeordnet, in welchem eine Rotordrehzahl der Rotorwelle 78 in eine Generatordrehzahl an einer Abtriebswelle 82 des Getriebes 80 umgesetzt wird. Eine Kupplungseinrichtung 83, beispielsweise in Form einer doppelkatalanischen, drehsteifen Stahllamellenkupplung, verbindet die Abtriebswelle 82 drehmomentübertragend mit einer Generatorwelle 84 eines Generators 85, beispielsweise eine Synchronmaschine mit Permanentmagneten, zum erzeugen elektrischen Stroms, vorliegend beispielsweise mit einer Leistung von maximal 750 kW. Die Kupplungseinrichtung 83 verhindert eine Überbestimmung der Lagerkräfte. Zur Drehmomentbegrenzung ist die Rotorwelle 78 mit einer Sollbruchstelle 86 versehen (beispielsweise Nenndrehmoment 500 kNm; Sollbruchmoment 1000 kNm; zul. Getriebespitzenmoment 1500 kNm).

Das Getriebe 80 übersetzt die erfindungsgemäss niedrige Rotordrehzahl in eine hohe Generatordrehzahl. Ein Getriebe-Übersetzungsfaktor i beträgt beispielsweise rund 65 bis 75, vorzugsweise ca. 70. Ein Getriebegehäuse 87 des Getriebes 80 ist starr über eine Flanschglocke 88 mit der Nabenanbindung verschraubt. So wird das hohe Betriebsdrehmoment direkt rückgeführt. Zwischen Rotorwelle 78 und Antriebsstrang 70 befindet sich eine doppelkardanische, ballig geschliffene Doppelzahnkupplung 89, die das Drehmoment des Rotor 2 ohne Überbestimmung von Lagerkräften auf das Getriebe 80 überträgt.

Ferner führt ein Pitchrohr 90 koaxial zur Rotorwelle 78 durch das Getriebe 80 und dient der Durchführung von Steuerungs- und Leistungskabeln für den Pitchantrieb 12. Das Pitchrohr 12 wird in der Kupplung 89 oberhalb der Sollbruchstelle 86 angetrieben, indem es mit dem Rotor 2 drehfest verbunden ist. Somit werden nach einem Bruch der Sollbruchstelle 86 und anschliessenden Auslauf der Anlage die Kabel bzw. Leitungen zur Signal- und/oder Energieübertragung (siehe Fig. 16) nicht verdreht und bleiben daher intakt. Am unteren Ende des Pitchrohrs 90 ist ein Schleifringpaket 90a angeordnet, in welchem über entsprechende Bürsten und Schleifringe (nicht dargestellt) miteinander zusammenwirkend die Signal- Steuerungs- und Leistungskabel für den Pitchantrieb 12 elektrisch leitend mit entsprechenden Steuerungs- und Leistungskabeln innerhalb des Turmes 4 verbunden sind, die dann zum Schaltschrank 6 führen.

Des Weiteren ist in Fig. 9 dargestellt, dass das Getriebe 80 eine Vielzahl von Getriebestufen besitzt, wie im vorliegenden Falle beispielsweise eine erste Getriebestufe 80a, eine zweite Getriebestufe 80b und eine dritte Getriebestufe 80c. Die erste Getriebestufe 80a und die zweite Getriebestufe 80b sind jeweils als Planetengetriebestufe 81 ausgeführt. Die Planetengetriebestufen 81 besitzen jeweils Planetenräder 81a, die jeweils über einen flexiblen Pin 81b an einem Steg 81c gelagert sind. Die Planetenräder 81a greifen mit ihren jeweiligen Zahnrädern in gleichzeitig ein Hohlrad 81d und in ein Sonnenrad 81e der jeweiligen Planetengetriebestufe 81 ein. Das Sonnenrad 81e der zweiten Getriebestufe 80b ist über eine Rutschkupplung 89a drehmomentübertragend mit einem Zahnrad 81f der als Stirnradgetriebe ausgestalteten dritten Getriebestufe 80c verbunden. Das Zahnrad 81f greift in ein Ritzel 81g der dritten Getriebestufe 80c ein. Das Ritzel 81g ist drehmomentübertragend mit der Antriebswelle 82 für den Generator 85 verbunden.

Fig. 1 zeigt eine schematische Perspektivansicht einer erfindungsgemässen Ausführungsform der Nabenanbindung 79 der Vertikalwindkraftanlage 1. Die Nabenanbindung 79 umfasst einen zylindrischen, trommelartigen einstückig ausgeformten Grundkörper 91, der eine Durchführung 92 zur Aufnahme einer Wellen-Lagereinheit 93 (siehe Fig. 9) des Antriebsstranges 70 bereitstellt. Stützfüsse 94 sind abstandsgleich aussenumfangsseitig am Grundkörper 91 befestigt und erstrecken sich radial davon weg. Die Stützfüsse 94 bilden jeweils eine horizontal ausgerichtete Auflage 95 zur Montage der Nabenanbindung 80 am Turmsystem 4 aus. Die Stützfüsse 94 können beispielsweise aus Blechen zusammengeschweisst sowie durch Schweissen einstückig mit dem Grundkörper 91 verbunden oder an diesen angeflanscht sein, der wiederum ebenfalls aus Blechen zusammengeschweisst sein kann.

Die Nabenanbindung 79 kann aus einer Vielzahl gleichförmiger Segmente gebildet sein, die jeweils zwei Flanschenden bereitstellen, an denen sie sich zu einem Kreis schliessend miteinander verbunden sind und somit gemeinsam die Durchführung 92 zur Aufnahme der Wellen-Lagereinheit 93 formen. Jedes der Segmente 96 bildet einen Tragarm aus. Am von der Durchführung 92 wegweisenden distalen Ende jedes Tragarmes kann eine vertikal verlaufende Traglasche ausgeformt sein, die in einer jeweiligen radialen Ebene liegend dazu ausgestaltet ist, am Turmsystem 4 montiert zu werden. Beispielsweise können die Segmente einzeln oder einstückig gegossen sein, was dabei helfen kann, insbesondere in der Serienproduktion Herstellungskosten zu senken und darüber hinaus Materialstärken der Segmente an hochbelastete Stellen anzupassen sowie Verrundungen zur Reduzierung von Kerbwirkungen daran vorzusehen, beispielsweise indem die Flanschenden unter Bildung eines Bogenprofils in die Tragarme übergehen.

Die Rotornabe 9 selber kann ebenfalls aus Segmenten 95 zusammengesetzt oder samt ihrer Segmente 95 einstückig gegossen sein. An jedem der Segmente 95 ist ein Flanschende 97 zur Befestigung von einem der Rotorarme 10 an der Rotornabe 9. Jedes Flanschende 97 kann an einem sich an der Rotornabe 9 von der Rotordrehachse $C_2$ weg erstreckenden Tragarm 98 ausgeformt sein. Die Tragarme 98 können ein Stück mit dem jeweiligen Segment 95 ausgeformt sein.

Die Rotorarme 10 besitzen eine obere Armhälfte 10a und eine untere Armhälfte 10b, die in radialer Richtung des Rotors 2 zur Rotornabe 9 hinweisend an einem Nabenende 10c des Rotorarms 10 zusammengeführt sind. Am Nabenende 10c ist ein Rotorarmnabenflansch 10d zur Befestigung des Rotorarms 10 an einem der Flanschenden 97 der Rotornabe 9 ausgeformt. Zwischen der oberen Armhälfte 10a und der unteren Armhälfte 10a entlang einer Längsachserstreckung des Rotorarms 10 verlaufend ist ein Verbindungssegment 10e des Rotorarms 10 vorgesehen, dass die obere Armhälfte 10a und die untere Armhälfte 10b entlang ihrer Längserstreckung miteinander verbindet.

Die Signal- und/der Messanordnung 11 kann auf einer Abdeckhaube 99 für die Rotornabe 9 angeordnet sein und umfasst beispielsweise eine Vielzahl von Windgeschwindigkeitssensoren 104 und Windrichtungssensoren 105, die jeweils an einem Stab 106 befestigt sind, der sich von der Abdeckhaube 99 weg erstreckt. Die Stäbe 106 können in axialer Richtung der Vertikalwindkraftanlage 1 betrachtet jeweils versetzt zu den Rotorarmen 10 angeordnet sein, sodass die jeweiligen Windgeschwindigkeitssensoren 104 und Windrichtungssensoren 105 möglichst nicht oder allenfalls nur über möglichst kurze zeitliche Abschnitte im Windschatten der Flügel 7 liegen während der Rotor 2 um seine Rotordrehachse $C_2$ rotiert.

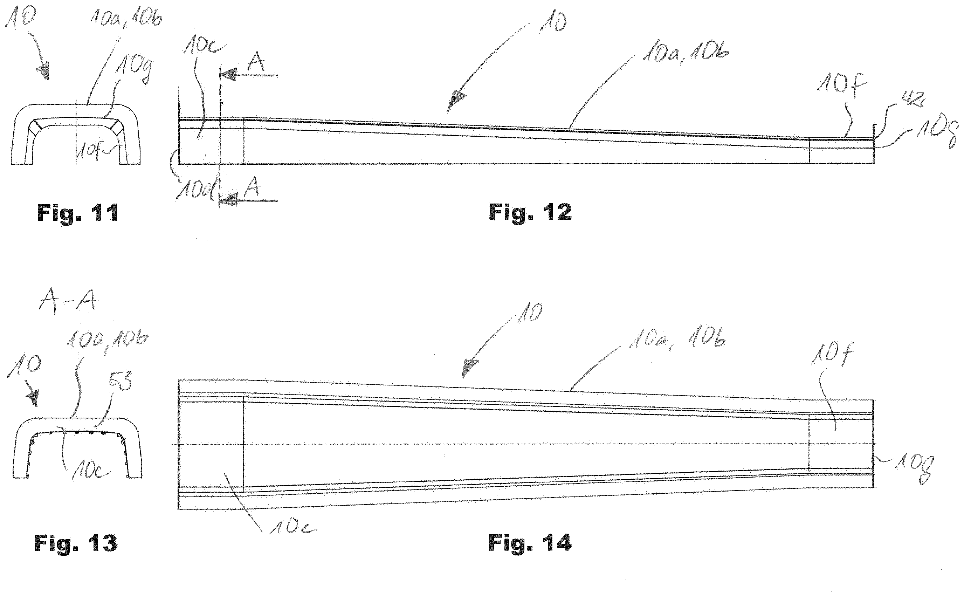

Fig. 11 zeigt eine schematische Vorderansicht eines Abschnittes von einem der Rotorarme 10 des Rotors 2 der Vertikalwindkraftanlage 1. Hier wird deutlich, dass an einem distalen Rotorarmende 10f ein Rotorarmflügelflansch 10g bzw. der Aufhängungskranz 42 zur Befestigung des Rotorarms am Flügel 7 bzw. dem jeweiligen Motorflansch 40 ausgeformt ist. Beim gezeigten Abschnitt des Rotorarmes 10 kann es sich sowohl um die obere Armhälfte 10a als auch um die untere Armhälfte 10b handeln, die gleichförmig ausgestaltet sind, um die Herstellung der Rotorarme 10 zu vereinfachen und deren Herstellungskosten zu minimieren.

Fig. 12 eine schematische Seitenansicht des in Fig. 11 gezeigten Abschnittes eines der Rotorarme 10 der Vertikalwindkraftanlage 1. Hier wird deutlich, dass die Rotorarme 10 sich in Höhenrichtung Z vom Nabenende 10c zum Rotorarmende 10f hin verjüngen.

Fig. 13 eine schematische Querschnittsansicht des in Fig. 11 und 12 gezeigten Abschnittes eines der Rotorarme 10 der Vertikalwindkraftanlage 1 entlang der in Fig. 12 dargestellten Schnittlinie A-A. Hier wird deutlich, dass die Rotorarme 10 im Bereich des Nabenendes 10 eine Wandstärke aufweisen, die zur Ausformung des Flügelblattachsabschnittes 53 derart genügt, dass das jeweilige Flügelblatt 19 am Flanschabschnitt 57 befestigt werden kann.

Fig. 14 eine schematische Draufsicht des in Fig. 11 bis 13 gezeigten Abschnittes des Rotorarmes 10 der Vertikalwindkraftanlage 1. Hier wird deutlich, dass die Rotorarme 10 sich ebenfalls quer zur Höhenrichtung Z Höhenrichtung Z vom Nabenende 10c zum Rotorarmende 10f hin verjüngen.

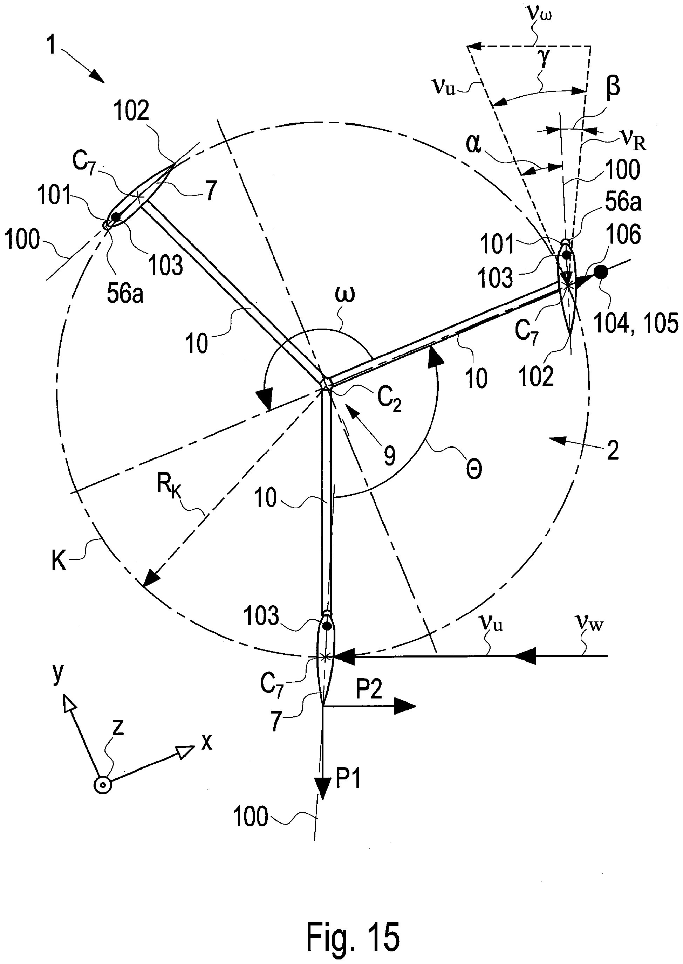

Fig. 15 zeigt eine schematische Draufsicht der Vertikalwindkraftanlage 1 zur Illustration von Winkelpositionen und Kräfteverhältnissen an den Flügeln 7 im Betrieb der Vertikalwindkraftanlage 1. Im Betrieb der Vertikalwindkraftanlage 1 werden die Flügel 7 vom Wind mit einer Windgeschwindigkeit $v_W$ angeströmt. Durch die Rotation des Rotors 2 um die Rotordrehachse $C_2$ ergibt sich eine Winkelgeschwindigkeit $\omega$ des Rotors 2, die multipliziert mit einem der Hälfte des Durchmessers $D_K$ der Kreisbahn K entsprechenden Radius $R_K$ der Kreisbahn K eine Umfangsgeschwindigkeit vu der Flügel 7 entlang der Kreisbahn K gemäss untenstehender Gleichung (1) ergibt:

$$v_U = \omega \times R_K \qquad\qquad (1)$$

Aus einer Differenz von Windgeschwindigkeit vw und Umfangsgeschwindigkeit vu resultiert eine Relativgeschwindigkeit $v_R$ der sich entlang der Kreisbahn K bewegenden Flügel 7 zum Wind gemäss untenstehender Gleichung (2):

$$v_R = v_W - v_U \qquad (2)$$

Zwischen Vektoren von Umfangsgeschwindigkeit $v_U$ und Relativgeschwindigkeit $v_R$ an den Flügel 7 besteht ein Anströmwinkel $\gamma$, der gemäss untenstehender Gleichung (3) aus einer Summe aus einem relativen Anströmungswinkel bzw. Anstellwinkel $\alpha$ und einem Steigungswinkel bzw. Pitchwinkel $\beta$ gebildet ist:

$$\gamma = \alpha + \beta \qquad (3)$$

Der Anstellwinkel $\alpha$ ist jeweils zwischen dem Vektor der Umfangsgeschwindigkeit vu und einer Profilsehne 100 der Flügel 7 gemessen, die geradlinig zwischen einer Anströmkante 101 und einer Abströmkante 102 verläuft. Der Pitchwinkel $\beta$ ist zwischen dem Vektor der Relativgeschwindigkeit $v_R$ und der Profilsehne 100 gemessen. Die Flügel 7 weisen ein symmetrisches Flügelprofil auf, wodurch die Flügelsehne eine Symmetrieebene der Flügel 7 bzw. deren Flügelblatts bildet.

Durch die Rotation des Rotors 2 um die Rotordrehachse $C_2$ ist die Relativgeschwindigkeit $v_R$ eine Funktion eines Azimut-Winkels O des Rotors 2, der beispielsweise für den jeweiligen Rotorarm 10 ausgehend von einem Nullpunkt bei Stellung in 90° zur Windrichtung aus dem Wind zugewandt drehend relativ zu einer Hauptachse der Vertikalwindkraftanlage 1 gemessen wird. Ein Tangens des Anströmwinkels $\gamma$ berechnet sich als Funktion von Windgeschwindigkeit vw, Relativgeschwindigkeit $v_R$ und Azimut-Winkel O bzw. einer Schnelllaufzahl $\lambda$ und Azimut-Winkel O gemäss untenstehender Gleichung (4):

$$\tan \gamma = \frac{v_W \sin \theta}{v_R + v_W \cos \theta} = \frac{\sin \theta}{\lambda \cos \theta} \qquad (4),$$

wobei die Schnelllaufzahl A wiederum gemäss untenstehender Gleichung (5) einem Verhältnis von Umfangsgeschwindigkeit vu zu Windgeschwindigkeit $v_W$ entspricht und erfindungsgemäss durch den jeweiligen Pitchantrieb 12 bzw. dessen Pitchmotor 27 den jeweiligen Windverhältnissen entsprechend bei variierenden Pitchwinkel $\beta$ möglichst optimal einzustellen und konstant zu halten ist, um eine Energieausbeute bzw. einen Ernteertrag einer erfindungsgemässen Vertikalwindkraftanlage 1 zu maximieren:

$$\lambda = \frac{v_U}{v_W} \qquad (5)$$

Um ein zur Variation des Pitchwinkels $\beta$ durch Drehung des Flügels 7 um die Rotordrehachse $C_7$ nötiges Stellmoment des Pitchantriebs 12 zu minimieren, ist es von Vorteil, wenn ein statischer Schwerpunkt des Flügels 7 möglichst auf der Rotordrehachse $C_7$ liegt. Beispielsweise ist die Rotordrehachse $C_7$ bei 20 bis 23%, vorzugsweise 21.5% einer von der Anströmkante 101 aus gemessenen Rotorblatttiefe auf der Profilsehne 100 liegend angeordnet. Um den Schwerpunkt auf die Rotordrehachse $C_7$ zu legen ist das Gegengewicht 56a im Bereich des Pitchantriebs 12 vorgesehen und fall erforderlich ein zusätzliches Gegengewicht 103 im Bereich der Anströmkante 101 im Flügel 7 angeordnet. Das zusätzliche Gegengewicht 103 ist beispielsweise aus Stabsegmenten gebildet, vorzugsweise eines Stahlrundstabs mit Durchmessern zwischen 60 und 100 mm, höchst vorzugsweise 80mm. Die Stabsegmente sind an den Rippen 54 befestigt. Vorteilhafterweise können die Segmente elektrisch leitend miteinander verbunden sein. Somit kann das zusätzliche Gegengewicht 103 eine Doppelfunktion erfüllen, in dem es zusätzlich als Blitzableiter dient.

Des Weiteren verfügt die Vertikalwindkraftanlage 1 über wenigstens einen Windgeschwindigkeitssensor 104 und/oder Windrichtungssensor 105. Der Windgeschwindigkeitssensor 104 und/oder Windrichtungssensor 105 ist am oberen Ende des Signal- und/oder Messmast 11 und/oder an wenigstens einem der Flügel 7 oder an allen Flügeln 7 angeordnet. Der Windgeschwindigkeitssensor 104 und/oder Windrichtungssensor 105 ist vorzugsweise im Bereich des Pitchantriebs 12 am Flügel 7 befestigt, weil dort gemessene Windgeschwindigkeiten und/oder -richtungen eine hohe Relevanz für die Steuerung des Pitchantrieb 12 aufweisen.

Um den Windgeschwindigkeitssensor 104 und/oder Windrichtungssensor 105 möglichst ausserhalb von vom Flügel 7 verursachten Luftturbulenzen zu halten, ist der Windgeschwindigkeitssensor 104 und/oder Windrichtungssensor 105 am distalen Ende eines am Flügel 7 bzw. Pitchantrieb 12 befestigten Stabes 106 angeordnet, das von der Rotordrehachse $C_2$ radial wegweisend über die Kreisbahn K hinaus in einen Bereich im Umfeld der Vertikalwindkraftanlage 1 ragt, der möglichst weitgehend ausserhalb von um den Rotor 2 und seine Komponenten herum gebildeten Luftströmungsgrenzschichten, also weitgehend ausserhalb des Einflussbereiches des Flügels 7, liegt.

Fig. 16 zeigt ein schematisches Diagramm zur Darstellung der Funktionsweise einer erfindungsgemässen Steuereinrichtung 107 der Vertikalwindkraftanlage 1. Die Steuereinrichtung 107 umfasst eine Versorgungseinheit 108, die einerseits mit einer Motorregelungseinheit 109 verbunden ist, die einen Leistungsteil 110 beinhaltet, und andererseits mit einer Drossel 111 und einem Filter 112 verbunden ist, um eine möglichst Störungs- und fehlerfreie Energieversorgung zu gewährleisten. Die Leistungseinheit 110 es beispielsweise als Inverter ausgestaltet.

Über Leitungen 113 zur Signal- und/oder Energieübertragung ist die Motorregelungseinheit 109 mit dem Pitchantrieb 12, einer Energieversorgungseinrichtung 114 und einer Kontrolleinheit 115 zur Überwachung und Steuerung der Vertikalwindkraftanlage 1 verbunden. Die Energieversorgungseinrichtung 114 umfasst eine Hauptenergieversorgungseinheit 116 und eine Hilfsenergieversorgungseinheit 117, wobei letztere beispielsweise eine Notenergieversorgung der Steuerungseinrichtung 107 übernimmt, wenn die Hauptenergieversorgungseinheit 116 ausfällt bzw. nicht zur Verfügung steht.

Des Weiteren umfasst die Steuereinrichtung 107 eine Motorschutzeinheit 118 und eine Datenübertragungseinheit 119. Der Pitchantrieb 12 umfasst des Weiteren einen Drehgeber 120 mit einem Positionssensor 121 zur Überwachung einer Drehposition des Rotorrings 30 gegenüber dem Statorring 29. Der Pitchmotor 27 umfasst des Weiteren eine Motoreinheit 122, die wenigstens den Statorring 29 und den Rotorring 30 beinhaltet, und einer Temperaturmesseinheit 123, die einen ersten Temperatursensor 124 und wenigstens einen weiteren Temperatursensor 125 aufweist. Der erste Temperatursensor 124 ist beispielsweise als widerstandsabhängiger Temperatursensor (KTY) ausgeführt, wohingegen der weitere Temperatursensor 125 beispielsweise als Temperatursensor mit positiven Temperaturkoeffizienten (PTC) ausgeführt ist.

Im Betrieb der Vertikalwindkraftanlage 1 richtet der Leistungsteil 110 der Motorregelungseinheit 109 der Steuereinrichtung 107 beispielsweise dauerhaft einen zum Antrieb des Pitchmotors 27 erforderlichen Strom um. Beispielsweise kann der Leistungsteil 110 einen Strom von dauerhaft 100 bis 200, vorzugsweise 150 $A_{RMS}$ abgeben sowie einen Spitzenstrom von 200 bis 250, vorzugsweise 210 $A_{RMS}$ bereitstellen, damit kurzfristig ein maximales Drehmoment des Pitchmotor 27 abgerufen werden kann. Die Kontrolleinheit 115 berechnet zyklisch einen Sollwert S für die Verstellung jedes der Flügel 7, beispielsweise als ein Soll-Pitchwinkel $\beta s$, und stellt diesen über die entsprechende Leitung 113 der Motorregelungseinheit 109 zur Verfügung.

Mit Hilfe des Drehgebers 120 wird ein Istwert I, beispielsweise ein Ist-Pitchwinkel $\beta_I$, ermittelt und über die entsprechende Leitung 113 an die Motorregelungseinheit 109 übertragen. Die Motorregelungseinheit 109 ermittelt aus Sollwert S und Istwert I eine Differenzwert d, beispielsweise eine Winkelabweichung $\delta$, und leitet daraus einen Stellwert U, beispielsweise in Form eines Steuerstromes A ab, der an die jeweilige Antriebseinheit 12 bzw. die Motoreinheit 122 des Pitchmotors 27 übertragen wird. Dementsprechend regelt die Motorregelungseinheit 109 erfindungsgemäss den Pitchwinkel $\beta$ unter möglichst geringer Winkelabweichung $\delta$.

Die Temperaturmesseinheit 123 erfasst mit Hilfe des Temperatursensors 124 und des Weiteren Temperatursensors 125 einen ersten Temperaturmesswert T bzw. wenigstens einen weiteren Temperaturmesswert $T_x$, die aus Redundanzgründen und/oder zu unterschiedlichen Verwendung ermittelt werden. So wird der Temperaturmesswert T über eine der Leitungen 113 zur Motorschutzeinheit 118 übertragen. Die Motorschutzeinheit 118 Vergleich den Temperaturmesswert T mit einem Temperaturgrenzwert und kann im Falle einer Überschreitung des Temperaturgrenzwertes über die entsprechende Leitung 113 ein Alarmsignal an die Motorregelungseinheit 109 übertragen, wo Massnahmen zum Schutz des jeweiligen Pitchantriebs 12, wie beispielsweise eine Notabschaltung bzw. Unterbrechung der Stromversorgung eingeleitet werden. Gleichzeitig kann die Motorschutzeinheit 118 über die entsprechende Leitung 113 Temperaturwerte zur Weitergabe von Temperaturdaten an die Motorregelungseinheit 109 und/oder Kontrolleinheit 115 an die Datenübertragungseinheit 119 übertragen.

Der weitere Temperaturmesswert $T_x$ wird über entsprechende Leitungen 113 direkt an die Motorregelungseinheit 109 übertragen, um eine Temperatur der Antriebseinheit 12 bzw. derer Komponenten im Rahmen einer vorgesehenen bzw. vorgeschriebenen Betriebstemperatur zu halten. In der Motorregelungseinheit 109 können unmittelbar Massnahmen zur Temperaturregelung eingeleitet werden, wohingegen in der Kontrolleinheit 115 längerfristige Temperaturregelungsmassnahmen vorgenommen werden können. Somit ist mit Hilfe des von der Motorschutzeinheit 118 auf Basis des Temperaturmesswerts T abgegebenen Alarmsignals eine kurzfristige Temperaturregelung zum Schutz der Antriebseinheit 12 bereitgestellt, wohingegen über die an die Kontrolleinheit 115 weitergeleiteten Temperaturdaten eine langfristige Temperaturregelung und über die direkte Weitergabe des weiteren Temperaturmesswert $T_x$ an die Motorregelungseinheit 109 eine mittelfristige Temperaturregelung möglich ist.

Die Steuereinrichtung 107 ist dazu ausgestaltet und eingerichtet, die folgenden zehn Betriebsmodi M0 bis M9 der Vertikalwindkraftanlage 1 zu realisieren:

- M0: Die Vertikalwindkraftanlage 1 ist in einem nullten Betriebsmodus M0 ausgeschaltet.

- M1: Anfahrbereitschaft der Vertikalwindkraftanlage 1 aus Windstille in einem erstem Betriebsmodus M1 bei Windgeschwindigkeiten unterhalb einer Startwindgeschwindigkeit $v_1$, also bei $0 < v_W < v_1$, mit beispielsweise $v_1 = 3$ m/s;

- M2: Anfahren der Vertikalwindkraftanlage 1 in einem zweiten Betriebsmodus M2 bei Windgeschwindigkeiten oberhalb der Startwindgeschwindigkeit $v_1$ und unterhalb einer Nennwindgeschwindigkeit $v_2$, also bei $v_1 \leq v_W < v_2$, mit beispielsweise $v_2 = 12$ m/s;

- M3: Überführen der Vertikalwindkraftanlage 1 von einem Widerstandslauf mit $\lambda \leq 1$ ausgehend in einen Schnelllauf mit $\lambda > 1$ in einem dritten Betriebsmodus M3 bzw. Anlaufmodus bei Windgeschwindigkeiten oberhalb der Startwindgeschwindigkeit $v_1$ und unterhalb einer ersten Abschaltwindgeschwindigkeit $v_3$, also bei $v_1 \leq v_W < v_3$, beispielsweise mit einer Mindestdrehzahl des Rotors von 4 [1/min] und einer ersten Abschaltwindgeschwindigkeit $v_3 = 20$ m/s (Mittelwert gemessen über 10 Minuten);

- M4: Abfahren der Vertikalwindkraftanlage 1 in einem vierten Betriebsmodus M4 bei Windgeschwindigkeiten oberhalb der ersten Abschaltwindgeschwindigkeit $v_3$ oder einer weiteren Abschaltwindgeschwindigkeit $v_4$, also bei $v_W > v_3$ bzw. $v_W > v_4$ mit beispielsweise $v_4 = 30$ m/s (Mittelwert gemessen über 3 Sekunden);

- M5: Wiederanfahren der Vertikalwindkraftanlage 1 in einem fünften Betriebsmodus M5 bei Unterschreiten einer Wiederanschaltwindgeschwindigkeit $v_5$, nach Abschaltung im vierten Betriebsmodus M4 mit beispielsweise $v_5 = 18$ m/s;

- M6: Betreiben der Vertikalwindkraftanlage 1 mit konstanter Schnelllaufzahl $\lambda$ in einem sechsten Betriebsmodus M6 bzw. Teillastmodus für Windgeschwindigkeiten oberhalb der Startwindgeschwindigkeit $v_1$ und unterhalb einer Nennwindgeschwindigkeit $v_2$, also bei $v_1 \leq v_W \leq v_2$, beispielsweise mit einer Schnelllaufzahl $\lambda$ zwischen 2 und 2.6, vorzugsweise zwischen 2.2 und 2.4, höchst vorzugweise 2.3 bei einer Nennwindgeschwindigkeit $v_2$ von 12m/s und einer Umfangsgeschwindigkeit der Flügel 7 auf der Kreisbahn K von vu = 27.6 m/s;

- M7: Betreiben der Vertikalwindkraftanlage 1 mit variabler Schnelllaufzahl A in einem siebten Betriebsmodus M7 bzw. Nennbetriebsmodus oder auch Vollastbetrieb mit einer Nenndrehzahl des Rotors von beispielsweise 16.5 [1/min] bei Windgeschwindigkeiten oberhalb der Nennwindgeschwindigkeit $v_2$ und unterhalb der ersten Abschaltwindgeschwindigkeit $v_3$ oder der weiteren Abschaltwindgeschwindigkeit $v_4$, also in einem Nennwindgeschwindigkeitsbereich mit $v_2 < vw \leq v_3$ bzw. $v_2 < v_W \leq v_4$; beispielsweise mit einer Schnelllaufzahl A zwischen 1 und 1.8, vorzugsweise zwischen 1.3 und 1.5, höchst vorzugweise 1.38 bei einer ersten Abschaltwindgeschwindigkeit $v_3$ von 20m1s;

- M8: Notabfahren der Vertikalwindkraftanlage 1 in einem achten Betriebsmodus M8 bei extremen Windgeschwindigkeitsanstiegsgradienten dvw/dt grösser einem Abschaltgradienten der Windgeschwindigkeit; und

- M9: Ausschalten der Vertikalwindkraftanlage 1 in einem neunten Betriebsmodus M9 zum Überführen der Vertikalwindkraftanlage 1 in den nullten Betriebsmodus aus einem der Betriebsmodi M1 bis M8.

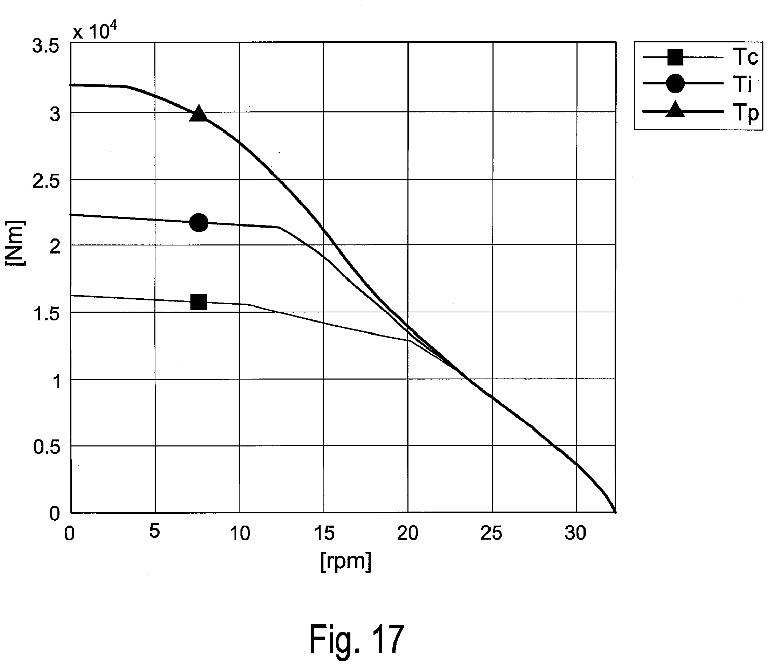

Fig. 17 zeigt ein schematisches Diagramm einer beispielhaften Drehmoment-Kennlinie des Pitchmotors 27. Das Diagramm zeigt ein maximales Drehmoment Tp, ein Nenndrehmoment Ti und kontinuierliches Drehmoment Tc des Pitchmotors 27 über der Umdrehungszahl des Pitchmotors 27. Das maximale Drehmoment Tp kann vom Pitchmotor 27 kurzfristig bereitgestellt werden um spontan, also innerhalb eines sehr kurzen stark begrenzten Zeitbereiches eine schnelle Verstellung des jeweiligen Flügels 7 zu bewirken. Bei Überschreitung des maximalen Drehmoments Tp, also bei Überlast, rutscht der Motor durch und ist somit eigensicher, d. h. es treten keine Schäden am Motor auf. Das Nenndrehmoment Ti kann dauerhaft bis zu Überschreitung eines Temperaturgrenzwertes abgerufen werden. Das kontinuierliche Drehmoment Tc steht in der Regel dauerhaft zur Verfügung und führt zu keinerlei Überschreitung von Temperaturgrenzwerten.

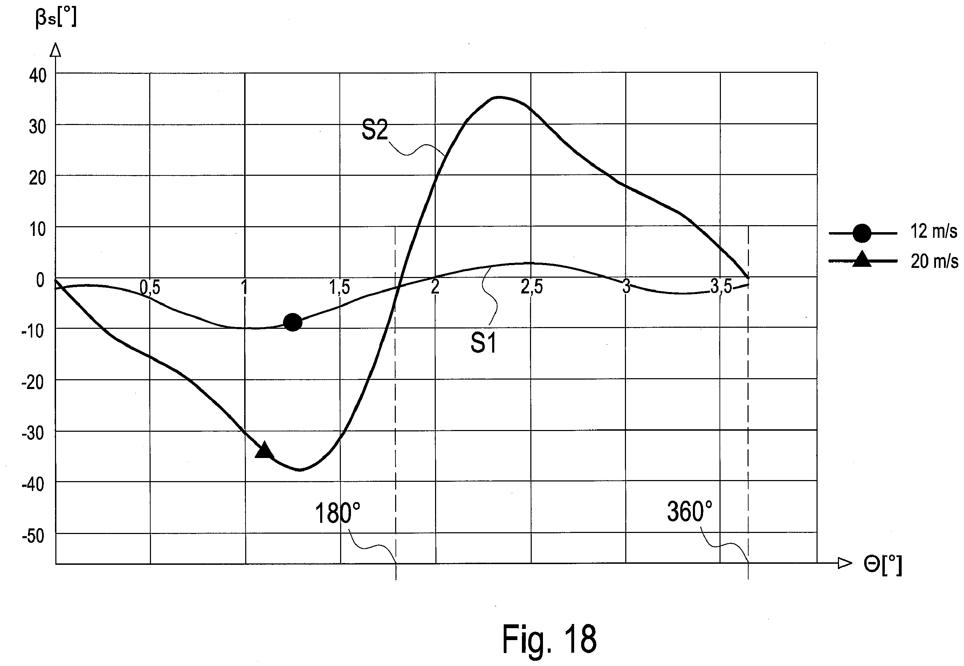

Fig. 18 zeigt ein schematisches Diagramm mit beispielhaften Kurvenscheiben zur Steuerung des Pitchmotors 12, nämlich eine erste Kurvenscheibe S1, die beispielsweise für die Nennwindgeschwindigkeit $v_2$ von beispielsweise 12 m/s vorgesehen ist, und eine weitere Kurvenscheibe S2, die für die erste Abschaltwindgeschwindigkeit $v_3$ von beispielsweise 20 m/s vorgesehen ist. Zwischen diesen beiden Windgeschwindigkeiten ist beispielsweise ein Nenn- bzw. Volllastbetrieb der Vertikalwindkraftanlage 1 gemäss siebten Betriebsmodus M7 vorgesehen, in dem der Rotor 2 mit einer Nenndrehzahl rotiert und der Generator 85 seine Nennleistung abgibt. Je Kurvenscheibe S1, S2 ist der Sollwert S des Pitchwinkels $\beta$ als Soll-Pitchwinkel $\beta s$ in Abhängigkeit vom Azimut-Winkel $\Theta$ dargestellt.

Bei Nennwindgeschwindigkeit $v_2$ liegt der Soll-Pitchwinkel $\beta s$ bei einem Azimut-Winkel $\Theta$ von 0° bei weniger als 0°, etwa im Bereich von -2 bis -3°. Auf dem Weg zu einem Azimut-Winkel Θ von 90° durchschreitet der Soll-Pitchwinkel βs zunächst ein lokales Maximum von -2 bis -3° bei einem Azimut-Winkel Θ von ca. 20° und anschliessend einen zwischen -3 und -4° liegenden Wendepunkt bei einem Azimut-Winkel O von ca. 20° bis der Soll-Pitchwinkel $\beta_s$ bei einem Azimut-Winkel O von ca. 50° ein absolutes Minimum von ca. -10° erreicht.

Bei einem Azimut-Winkel Θ von 180° liegt der Soll-Pitchwinkel β, für die Nennwindgeschwindigkeit $v_2$ wieder bei ca. 2 bis -3° und erreicht dann bei einem Azimut-Winkel Θ von ca. 200° einen Wert von 0°. Bei einem Azimut-Winkel Θ von ca. 250° erreicht der Soll-Pitchwinkel βs für die Nennwindgeschwindigkeit $v_2$ sein absolutes Maximum von ca. 2 bis 3° und erreicht dann bei einem Azimut-Winkel Θ von ca. 290° wieder einen Wert von 0° und in etwa gleichzeitig einen Wendepunkt. Anschliessend durchschreitet der Soll-Pitchwinkel $\beta_s$ ein lokales Minimum von ca. -3 bis -4° bei einem Azimut-Winkel Θ von ca. 330° und erreicht abschliessend bei einem Azimut-Winkel Θ von ca. 360° wieder seinen Ausgangsbereich von -2 bis -3°.

Bei der ersten Abschaltwindgeschwindigkeit $v_3$ liegt der Soll-Pitchwinkel βs bei einem Azimut-Winkel Θ von 0° bei weniger als 0°, etwa im Bereich von -1 bis -2°, und ist somit kleiner als der Soll-Pitchwinkel $\beta_s$ bei einem Azimut-Winkel O von 0° bei Nennwindgeschwindigkeit $v_2$. Auf dem Weg zu einem Azimut-Winkel Θ von 90° durchschreitet der Soll-Pitchwinkel βs ohne lokales Maximum einen zwischen -14 und -16° liegenden Wendepunkt bei einem Azimut-Winkel Θ von ca. 45° bis der Soll-Pitchwinkel βs bei einem Azimut-Winkel Θ von ca. 100° mit ca. -30° einen weiteren Wendepunkt und dann bei einem Azimut-Winkel Θ von ca. 100° ein absolutes Minimum von ca. -37° bis -38° erreicht.

Bei einem Azimut-Winkel 4 von 180° liegt der Soll-Pitchwinkel βs für die erste Abschaltwindgeschwindigkeit $v_3$ ähnlich wie der Soll-Pitchwinkel βs für die Nennwindgeschwindigkeit $v_2$ bei ca. -2 bis -3° und erreicht dann bei einem Azimut-Winkel Θ von ca. 170° früher als der Soll-Pitchwinkel βs für die Nennwindgeschwindigkeit $v_2$ einen Wert von 0°. Bei einem Azimut-Winkel Θ von ca. 230 bis 240° erreicht der Soll-Pitchwinkel $\beta_s$ sein absolutes Maximum von ca. 35° und erreicht dann bei einem Azimut-Winkel Θ von ca. 270° einen Wendepunkt mit ca. 25°. Anschliessend durchschreitet der Soll-Pitchwinkel $\beta_s$ einen Wendepunkt mit ca. 15° bei einem Azimut-Winkel Θ von ca. 320° und erreicht abschliessend bei einem Azimut-Winkel Θ von ca. 360° wieder seinen Ausgangsbereich von -1 bis -2°.

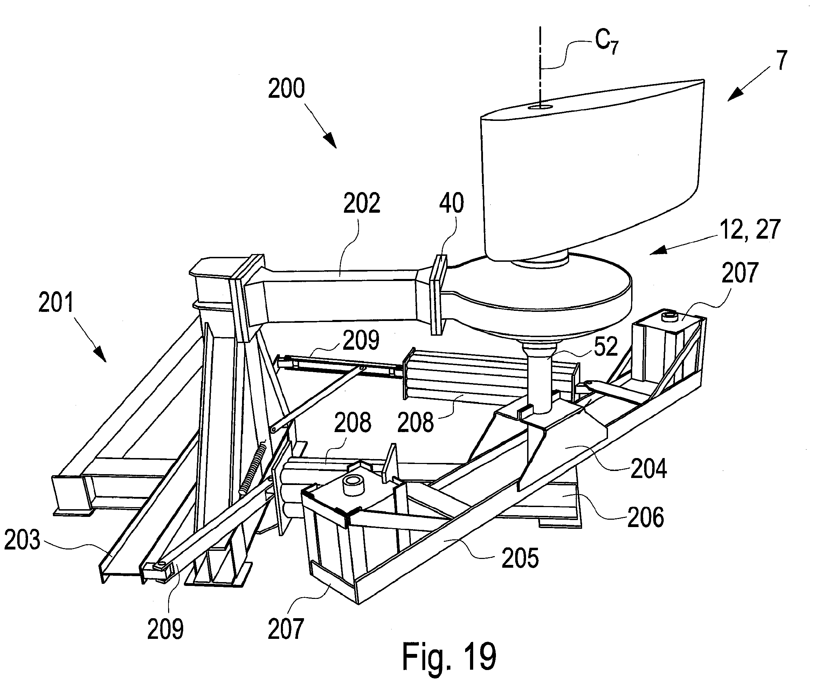

Fig. 19 zeigt eine schematische Perspektivansicht eines Prüfstandes 200 zur Ermittlung eines Positionierungsfehlers des Pitchmotors 27 der Vertikalwindkraftanlage 1. der Prüfstand 200 sitzt eine Rahmenkonstruktion 201, an der ein Haltearm 202 zum Halten des Pitchantriebs 12 bzw. Pitchmotors 27 und ein Querarm 203 befestigt ist. Der Pitchantrieb 12 ist samt einem Abschnitt des Flügels 7 ähnlich wie am Rotorarm 10 der Vertikalwindkraftanlage 1 über den Motorflansch 40 am Haltearm 202 des Prüfstandes 200 montiert. Der aus dem Pitchmotor 27 heraus ragende Übergangsabschnitt 52 ist in einer Wellenaufnahme 204 des Prüfstand 200 um die Flügeldrehachse $C_7$ drehbar aufgenommen.

Die Wellenaufnahme 204 ist mittig auf einem Pendelarm 205 angeordnet, der ebenfalls um die Flügeldrehachse $C_7$ drehbar bei einem Ausläufer 206 der Rahmenkonstruktion 201 gehalten ist. An beiden von der Flügeldrehachse $C_7$ wegweisenden Enden des Pendelarmes 205 ist jeweils ein Gewichtskörper 207 gehalten. Die Gewichtskörper 207 simulieren eine Gesamtmasse des Flügels 7. Des Weiteren sind die Enden des Pendelarmes 205 über Federelemente 208 in Form von Spiralfederpaketen und an diesen befestigten Gelenkseinrichtungen 209 mit den Querarm 203 verbunden. Die Federelemente 208 simulieren Windkräfte.

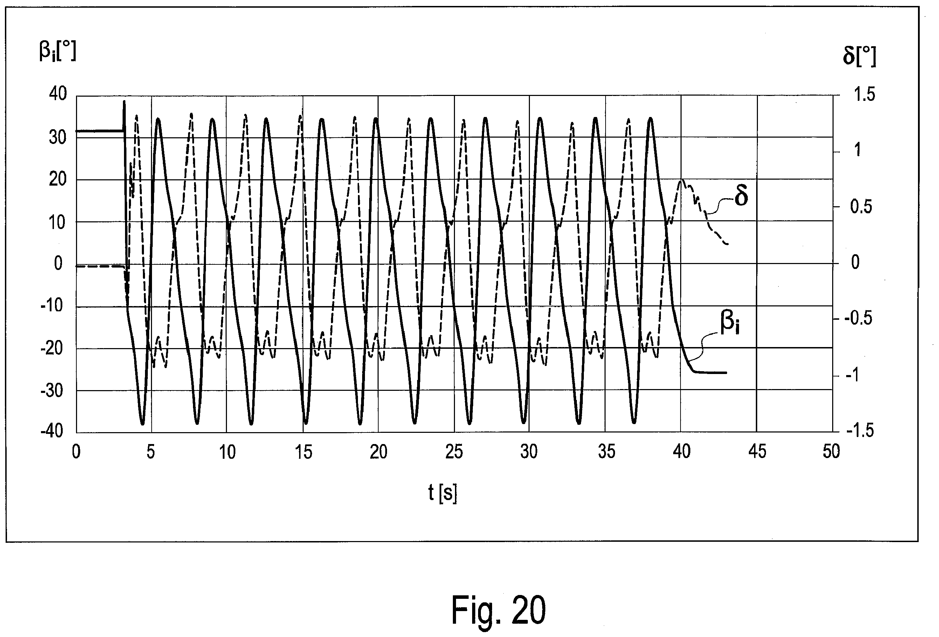

Fig. 20 zeigt ein schematisches Diagramm eines mittels des in Fig. 19 gezeigten Prüfstandes 200 ermittelten Positionierungsfehlers in Form einer Winkelabweichung δ des Pitchmotors 27 in ° über die Zeit t in Sekunden für eine Vielzahl von Regelungszyklen während denen ein simulierter Azimut-Winkel Θ jeweils eine Rotordrehung von 360° durchläuft. Nach einem anfänglichen Einschwingvorgang, der in der Vertikalwindkraftanlage 1 nicht auftritt, erreicht die Winkelabweichung δ einen Wert von betragsmässig weniger als 1.5° für Soll-Pitchwinkel βs die betragsmässig bei maximal 30 bis 40° liegen.

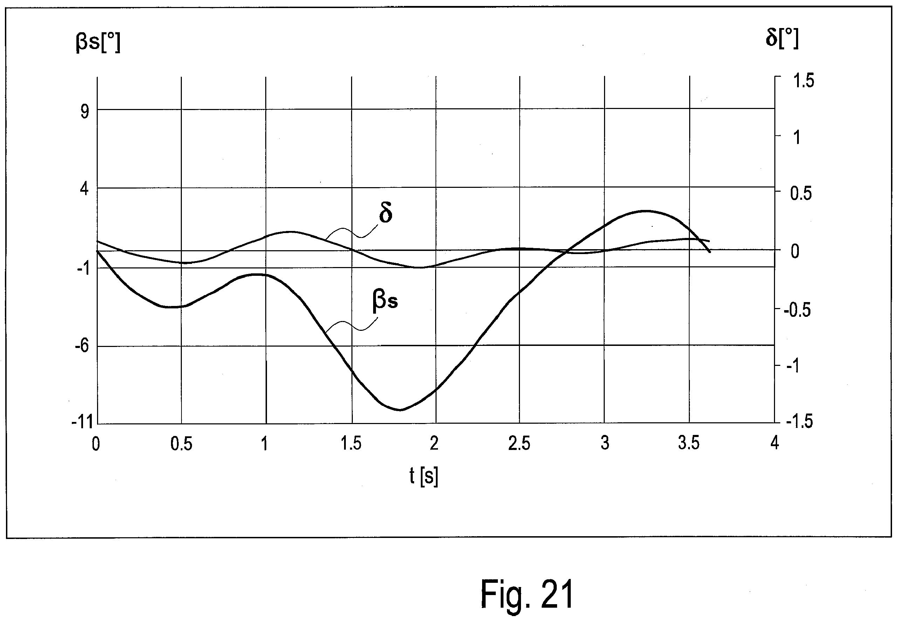

Fig. 21 zeigt ein schematisches Diagramm eines Positionierungsfehlers des Pitchmotors 27 in Form der Winkelabweichung δ in ° über die Zeit t in Sekunden über einen Regelungszyklus für die Nennwindgeschwindigkeit $v_2$. Bei Nennwindgeschwindigkeit $v_2$ liegt die Winkelabweichung δ betragsmässig stets unterhalb 0.5° und erreicht betragsmässig maximal ca. 0.25° jeweils nach lokalen und absoluten Minima sowie Maxima des Soll-Pitchwinkels $\beta_s$. Im Bereich der Wendepunkte des Soll-Pitchwinkels $\beta_l$ bewegt sich die Winkelabweichung δ um 0°.

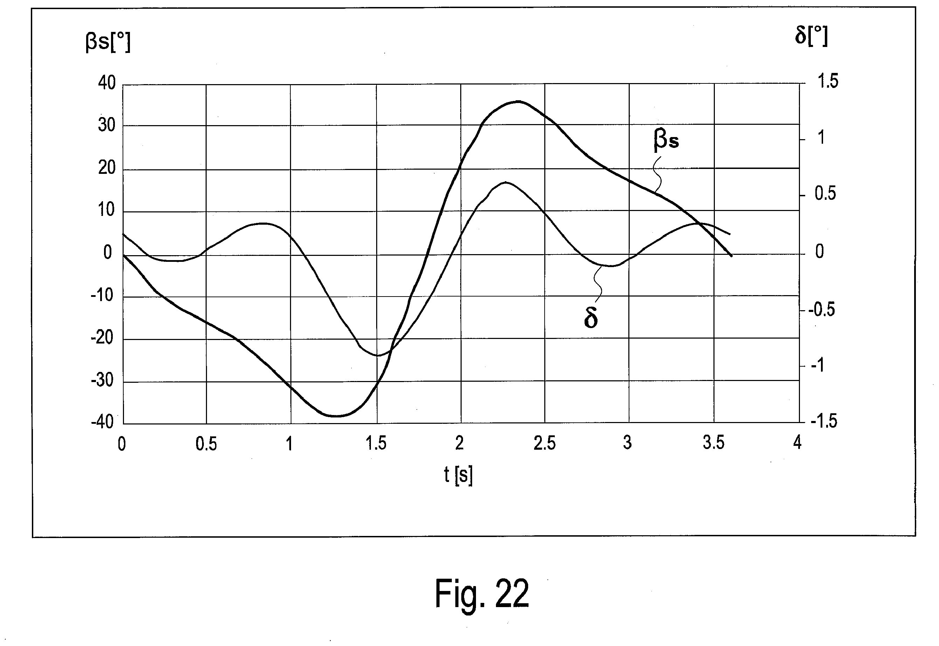

Fig. 22 zeigt ein schematisches Diagramm eines Positionierungsfehlers des Pitchmotors 27 in Form der Winkelabweichung δ in ° über die Zeit t in Sekunden über einen Regelungszyklus für die erste Abschaltwindgeschwindigkeit $v_3$. Bei erster Abschaltwindgeschwindigkeit $v_3$ liegt die Winkelabweichung δ betragsmässig stets unterhalb 1.5° und erreicht betragsmässig maximal ca. 1.45° nach lokalen und absoluten Minima sowie betragsmässig maximal ca. 0.6 bei lokalen und absoluten Maxima des Soll-Pitchwinkels βs. Im Bereich der Wendepunkte des Soll-Pitchwinkels $\beta_l$ bewegt sich die Winkelabweichung δ ebenfalls um 0°. Generell fällt die Winkelabweichung δ bei erster Abschaltwindgeschwindigkeit $v_3$ also leicht höher aus als bei Nennwindgeschwindigkeit $v_2$.

Im Rahmen des Erfindungsgedankens sind Abweichungen von den oben beschriebenen Ausführungsformen und Ausführungsbeispielen möglich. So wird ein Fachmann erkennen, dass sich Kennwerte und Parameter der Vertikalwindkraftanlage 1 und ihrer Komponenten sowie Werte zur Steuerung der Komponenten je nach Dimensionierung der Vertikalwindkraftanlage 1 richten und ändern können. Folglich sind sämtliche oben genannten Absolutwerte physikalischer Grössen, wie z.B. Windgeschwindigkeiten, hauptsächlich für einen hier beschriebenen Auslegungsfall der Vertikalwindkraftanlage 1 mit einer Nennleistung von 750 KW, einer Nennhöhe von 105m, einem Rotordurchmesser von 32 m, einer Länge der Flügel 7 von 54 m, einer Höhe der Flügel 7 über den Boden von 51 m, einer Höhe der Mitte der Flügel 7 über dem Boden von 78 m, einer Überlebenswindgeschwindigkeit von 59.5 m/s und einer Jahresmittelwindgeschwindigkeit von 8.5 m/s angegeben und können entsprechend anderer Auslegungsfälle variiert werden, woraus sich wiederum Abweichungen relativer physikalischer Grössen, wie z.B. Schnelllaufzahlen, ergeben können.

Des Weiteren können im Rahmen des Erfindungsgedankens anders als beim hier beschriebenen Ausführungsbeispiel mehr als zwei Pitchantriebe 12 pro Flügel 7 bzw. beispielsweise jeweils ein Pitchantrieb 12 pro Flügelabschnitt 13 vorgesehen sein. Mit anderen Worten können jeweils zwei vertikal voneinander getrennt angetriebene Flügel 7 bzw. Flügelabschnitte 13 vorgesehen sein. So können beispielsweise zwei Pitchantriebe 12 zwischen zwei Flügeln 7 oder Flügelabschnitten 13 angeordnet und als oberer und unterer Pitchantrieb 12 jeweils einem oberen bzw. einem unteren der beiden Flügel 7 oder Flügelabschnitte 13 zugeordnet sein. Der obere Flügel oder Flügelabschnitt 13 kann somit unabhängig vom unteren Flügel 7 oder Flügelabschnitt 13 um seine jeweilige Flügeldrehachse $C_7$ gedreht werden.

Jedem der beiden Flügel 7 oder Flügelabschnitte 13 kann wenigstens ein Windgeschwindigkeits- 104 und/oder Windrichtungssensor 105 zugeordnet sein. Vorteilhafterweise ist der wenigstens eine Windgeschwindigkeits- 104 und/oder Windrichtungssensor 105 mittig am jeweiligen Flügel 7 bzw. Flügelabschnitt 13 angeordnet und kann dort an einem Stab 106 angebracht sein wie oben beschrieben ist. Somit lassen sich für jeden der vertikal übereinander angeordneten Flügel 7 bzw. Flügelabschnitte 13 getrennt voneinander optimale Pitchwinkel β einstellen, um sich in Höhenrichtung Z entlang der Flügels 7 ändernde Windströmungsverhältnisse beim Betrieb der Vertikalwindkraftanlage 1 zu berücksichtigen und somit deren Effizienz weiter zu erhöhen. Dies ist insbesondere für Kreisbahndurchmesser $D_K$ in Betracht zu ziehen, die grösser als 32m sind und beispielsweise bei 45m liegen, wobei eine gesamte Länge $L_7$ der Flügel 7 dann beispielsweise ca. 73m betragen würde.

**Bezugszeichenliste**

| | |
|---|---|
| 1 | Vertikalwindkraftanlage |
| 2 | Rotor |
| 3 | Maschinenhaus |
| 4 | Turmsystem |
| 5 | Fundamente |
| 6 | Schaltschrank |
| 7 | Flügel |
| 8 | Flügelaufhängung |
| 9 | Rotornabe |
| 10 | Rotorarm |
| 10a | obere Armhälfte |
| 10b | untere Armhälfte |
| 10c | Nabenende |
| 10d | Rotorarmnabenflansch |
| 10e | Verbindungssegment |
| 10f | Rotorarmende |
| 10g | Rotorarmflügelflansch |
| 11 | Signal-und/oder Messanordnung |
| 12 | Pitchantrieb |
| 13 | Flügelabschnitt |
| 13a | oberer Endabschnitt |
| 13b | oberer Mittelabschnitt |
| 13c | unterer Mittelabschnitt |
| 13d | unterer Endabschnitt |
| 13e | oberer Flügelabschnitt |
| 10f | unterer Flügelabschnitt |
| 14 | Lagerpunkt |
| 19 | Flügelblatt |
| 25 | Motorwelle |
| 26 | Flügelachse |
| 27 | Pitchmotor |

27a   Motorbrems und/oder -blockiereinrichtung
27b   Feststellbolzen
27c   Feststellöffnung
28   Zwischenraum
29   Statorring

30   Rotorring
31   Kühlkörper
32   Kühlrippen
33   Felge
34   Befestigungselement
35   Motorgehäuse
35a   obere Gehäusehälfte
35b   untere Gehäusehälfte
36   Motorinnenraum
37   Wandung / Decke
38   Wandung / Boden
39   Lagersitz
40   Motorflansch
40a   Freiraum
41   Stirnfläche
41a   obere Flanschhälfte
41b   untere Flanschhälfte
42   Aufhängungskranz
43   Gegenstirnfläche
44   Verbindungselement
45   Versteifungslamelle
46   Sensorelement
46a   erster Drehgeber
46b   zweiter Drehgeber
47   Motorlager
48   Lageraufnahmeraum
49   Dichtelement
50   innerer Ring
51   äusserer Ring
52   Übergangsabschnitt
53   Flügelblattachsabschnitt
55   Verbindungsende
56   Ausgleichsgewichtshalterung
56a   Ausgleichsgewicht
57   Flanschabschnitt
58   Formschlusselement
59   weiteres Verbindungselement
60   Aussenhaut
61   Verschalung
62   Oberschale
63   Unterschale
64   Antriebsspalt
65   Kühlöffnung
66   Fortsatz
67   Abschlussstück
68a   Ansaugstutzen / -Öffnung
68b   Ablassöffnung
69   Kühlluftkanal
70   Antriebsstrang
71   Antriebswelle
72   Sockel
73   Zapfen

| | |
|---|---|
| 74 | Nabenschulter |
| 75 | Übergangsring |
| 76 | Rotorlagerung |
| 76a | erstes Rotorlager |
| 76b | zweites Rotorlager |
| 76c | drittes Rotorlager |
| 77 | Lagerbuchse |
| 78 | Rotorwelle |
| 79 | Nabenanbindung |
| 80 | Nabenanbindung |
| 80' | Nabenanbindung |
| 80 | Getriebe |
| 80a | erste Getriebestufe |
| 80b | zweite Getriebestufe |
| 80c | dritte Getriebestufe |
| 81 | Planetengetriebestufe |
| 81a | Planetenzahnrad |
| 81c | Steg |
| 81d | Hohlrad |
| 81e | Sonnenrad |
| 81f | Zahnrad |
| 81g | Ritzel |
| 82 | Abtriebswelle |
| 83 | Kupplungseinrichtung |
| 84 | Generatorwelle |
| 85 | Generator |
| 86 | Sollbruchstelle |
| 87 | Getriebegehäuse |
| 88 | Flanschglocke |
| 89 | Doppelzahnkupplung |
| 90 | Pitchrohr |
| 90a | Schleifringpaket |
| 91 | Grundkörper |
| 92 | Durchführung |
| 93 | Wellen-Lagereinheit |
| 94 | Stützfüsse |
| 95 | Auflage |
| 96 | Segment |
| 97 | Flanschende |
| 98 | Tragarm |
| 99 | Abdeckhaube |
| 100 | Profilsehne |
| 101 | Anströmkante |
| 102 | Abströmkante |
| 103 | zusätzliches Gegengewicht |
| 104 | Windgeschwindigkeitssensor |
| 105 | Windrichtungssensor |
| 106 | Stab |
| 107 | Steuereinrichtung |
| 108 | Versorgungseinheit |
| 109 | Motorregelungseinheit |
| 110 | Leistungsteil |
| 111 | Drossel |
| 112 | Filter |
| 113 | Leitung |
| 114 | Energieversorgungseinrichtung |
| 115 | Kontrolleinheit |

| | |
|---|---|
| 116 | Hauptenergieversorgungseinheit |
| 117 | Hilfsenergieversorgungseinheit |
| 118 | Motorschutzeinheit |
| 119 | Datenübertragungseinheit |
| 120 | Drehgeber |
| 121 | Positionssensor |
| 122 | Motoreinheit |
| 123 | Temperaturmesseinheit |
| 124 | Temperatursensor |
| 125 | weiterer Temperatursensor |
| 200 | Prüfstand |
| 201 | Rahmenkonstruktion |
| 202 | Haltearm |
| 203 | Querarm |
| 204 | Wellenaufnahme |
| 205 | Pendelarm |
| 206 | Ausläufer |
| 207 | Gewichtskörper |
| 208 | Federelement |
| 209 | Gelenkseinrichtung |

| | |
|---|---|
| $i$ | Getriebeumsetzungsfaktor |
| $d$ | Differenzwert |
| $t$ | Zeit |
| $vw$ | Windgeschwindigkeit |
| $vu$ | Umfangsgeschwindigkeit |
| $v_R$ | Relativgeschwindigkeit |
| $v_1$ | Startwindgeschwindigkeit |
| $v_2$ | Nennwindgeschwindigkeit |
| $v_3$ | erste Abschaltwindgeschw. |
| $v_4$ | weitere Abschaltwindgeschw. |
| $v_5$ | Wiederanschaltwindgeschw. |

| | |
|---|---|
| $A$ | Steuerstrom |
| $B_4$ | maximale Breite des Turmsystems |
| $C_2$ | Rotordrehachse |
| $C_7$ | Flügeldrehachse |
| $C_{71}$ | Antriebsdrehachse |
| $D_K$ | Durchmesser der Kreisbahn |
| $L_7$ | Länge der Flügel |
| $K$ | Kreisbahn |
| $I$ | Istwert |
| $P1$ | Widerstandskraft |
| $P2$ | Auftriebskraft |
| $S$ | Sollwert |
| $S1$ | erste Kurvenscheibe |
| $S2$ | weitere Kurvenscheibe. |

| | |
|---|---|
| $T$ | Temperaturmesswert |
| $T_x$ | weiterer Temperaturmesswert |
| $Tc$ | kontinuierliches Drehmoment |
| $Ti$ | Nenndrehmoment |
| $Tp$ | maximales Drehmoment |
| $U$ | Stellenwert |
| $R_K$ | Radius der Kreisbahn |

| | |
|---|---|
| $X$ | Längsrichtung |
| $Y$ | Querrichtung |

Z    Höhenrichtung

α    Anstellwinkel
β    Pitchwinkel
$\beta_I$    Soll-Pitchwinkel
$\beta_S$    Ist-Pitchwinkel
δ    Winkelabweichung
γ    Anströmwinkel
λ    Schnelllaufzahl
Θ    Azimut-Winkel
ω    Winkelgeschwindigkeit

**Patentansprüche**

1.  Vertikalwindkraftanlage (1) mit einer Vielzahl vertikaler Flügel (7), die unabhängig voneinander um eine jeweilige Flügeldrehachse ($C_7$) motorisch drehbar beweglich und auf einer gemeinsamen Kreisbahn (K) um eine vertikale Rotordrehachse ($C_2$) rotierbar gelagert sind,
    **dadurch gekennzeichnet, dass**
    die Flügel (7) jeweils an wenigstens einem Pitchmotor (27) zum motorischen Drehen der Flügel (7) um ihre jeweilige Flügeldrehachse ($C_7$) tragend gehalten befestigt sind.

2.  Vertikalwindkraftanlage (1) nach Anspruch 1, **dadurch gekennzeichnet, dass** der Pitchmotor (27) als Torquemotor ausgestaltet ist, mit wenigstens einem Rotorring (30), der mit dem jeweiligen Flügel (7) drehstarr verbunden ist.

3.  Vertikalwindkraftanlage (1) nach Anspruch 1 oder 2, **dadurch gekennzeichnet, dass** der Rotorring (30) aussenumfangsseitig auf einer Motorwelle (25) des Pitchmotors (27) aufliegt.

4.  Vertikalwindkraftanlage (1) nach wenigstens einem der Ansprüche 1 bis 3, **dadurch gekennzeichnet, dass** die Flügel (7) an Motorlagern (47) im Pitchmotor (27) gelagert getragen sind.

5.  Vertikalwindkraftanlage (1) nach wenigstens einem der Ansprüche 1 bis 4, **dadurch gekennzeichnet, dass** die Flügel (7) einen oberen Flügelabschnitt (13, 13e) und einen unteren Flügelabschnitt (13, 13f) umfassen, und dass der Pitchmotor zwischen oberem Flügelabschnitt (13, 13e) und unterem Flügelabschnitt (13, 13f) angeordnet ist.

6.  Vertikalwindkraftanlage (1) nach wenigstens einem der Ansprüche 1 bis 5, **dadurch gekennzeichnet, dass** die Flügel (7) an den Pitchmotor (27) angeflanscht sind.

7.  Vertikalwindkraftanlage (1) nach Anspruch 6, **dadurch gekennzeichnet, dass** der Pitchmotor (27) wenigstens einen Drehgeber (46a, 46b) zur Bestimmung einer Drehposition des Flügels (7) umfasst.

8.  Vertikalwindkraftanlage (1) nach wenigstens einem der Ansprüche 1 bis 7, **dadurch gekennzeichnet, dass** die Pitchmotoren (27) jeweils über ein Motorgehäuse (35) verfügen, an dem ein die Flügel (7) mit einer Rotornabe (9) der Vertikalwindkraftanlage (1) verbindender Rotorarm (10) befestigt ist.

9.  Vertikalwindkraftanlage (1) nach Anspruch 8, **dadurch gekennzeichnet, dass** der Rotorarm 10 an das Motorgehäuse (35) angeflanscht ist.

10. Vertikalwindkraftanlage (1) nach Anspruch 8 oder 9, **dadurch gekennzeichnet, dass** ein Statorring (29) des Pitchmotors (27) zwischen zwei Flanschhälften (41a, 41b) eines Aufhängungskranzes (42) des Motorgehäuses (35) und/oder zwischen einer Oberschale (62) und einer Unterschale (63) einer den Pitchmotor (27) zumindest abschnittsweise einhausenden Verschalung (61) angeordnet ist.

11. Vertikalwindkraftanlage (1) nach Anspruche 10, **dadurch gekennzeichnet, dass** die Verschalung (61) wenigstens einen Ansaugstutzen (68a) und wenigstens eine Ablassöffnung (68b) ausbildet, um Kühlluft zwischen Ansaugstutzen (68a) und Ablassöffnung (68b) zumindest abschnittsweise entlang eines am Statorring (29) angebrachten Kühlkörpers (31) zu leiten.

12. Vertikalwindkraftanlage (1) nach wenigstens einem der Ansprüche 1 bis 11, **gekennzeichnet, durch** ein Getriebe (80), das einen um die Rotordrehachse ($C_2$) drehbaren Rotor (2) der Vertikalwindkraftanlage (1) mit einem Generator (85) der Vertikalwindkraftanlage (1) koppelt, wobei wenigstens eine Getriebestufe (80a, 80b, 80c) des Getriebes (80) als Planetengetriebestufe (81) ausgestaltet ist.

13. Vertikalwindkraftanlage (1) nach Anspruch 12, **dadurch gekennzeichnet, dass** wenigstens ein Planetenzahnrad (80a) der Planetengetriebestufe (81) über einen flexiblen Pin (81b) mit einem Steg (81c) der Planetengetriebestufe (81) verbunden ist.

14. Bausatz für eine Vertikalwindkraftanlage (1) gemäss wenigstens einem der Ansprüche 1 bis 13.

15. Verfahren zum Betrieb einer Vertikalwindkraftanlage (1), wobei Winkelpositionen um eine jeweilige vertikale Rotor-drehachse ($C_2$) rotierbar gelagerter und um eine jeweilige Flügeldrehachse ($C_7$) motorisch drehbar beweglich an-getriebener vertikaler Flügel (7) der Vertikalwindkraftanlage (1) vorgegeben werden, **dadurch gekennzeichnet, dass** die Winkelpositionen der Flügel (7) durch jeweils wenigstens einen den jeweiligen Flügel (7) tragenden Pitchmotor (27) vorgegeben werden.

## Claims

1. A vertical wind turbine (1) with a plurality of vertical blades (7), which are motor-driven pivotable around a respective blade rotation axis ($C_7$) independently from each other, and are rotatable on a common circular path (K) around a vertical rotor rotation axis ($C_2$),
   **characterised in that**
   the blades (7) are each held in a supporting manner on at least one pitch motor (27) for motor-driven pivoting of the blades (7) around their respective blade rotation axis ($C_7$).

2. The vertical wind turbine (1) according to claim 1, **characterised in that** the pitch motor (27) is embodied as a torque motor with at least one rotor ring (30) that is torsionally rigidly coupled to the respective blade (7).

3. The vertical wind turbine (1) according to claim 1 or 2, **characterised in that** the rotor ring (30) rests against the outside circumference of the motor shaft (25) of the pitch motor (27).

4. The vertical wind turbine (1) according to at least one of claims 1 to 3, **characterised in that** the blades (7) are borne supported on motor bearings (47) in the pitch motor (27).

5. The vertical wind turbine (1) according to at least one of claims 1 to 4, **characterised in that** the blades (7) include an upper blade section (13, 13e) and a lower blade section (13, 13f) and the pitch motor is positioned between the upper blade section (13, 13e) and the lower blade section (13, 13f).

6. The vertical wind turbine (1) according to at least one of claims 1 to 5, **characterised in that** the blades (7) are flange-mounted to the pitch motor (27).

7. The vertical wind turbine (1) according to claim 6, **characterised in that** the pitch motor (27) includes at least one rotary transducer (46a, 46b) for determining a rotation position of the blade (7).

8. The vertical wind turbine (1) according to at least one of claims 1 to 7, **characterised in that** the pitch motors (27) each have a motor housing (35) to which a rotor arm (10) is fastened, which connects the blades (7) to a rotor hub (9) of the vertical wind turbine (1).

9. The vertical wind turbine (1) according to claim 8, **characterised in that** the rotor arm (10) is flange mounted to the motor housing (35).

10. The vertical wind turbine (1) according to claim 8 or 9, **characterised in that** a stator ring (29) of the pitch motor (27) is positioned between two flange halves (41a, 41b) of a mounting collar (42) of the motor housing (35) and/or between an upper shell (62) and a lower shell (63) of a casing (61) that at last partially cases-in the pitch motor (27).

11. The vertical wind turbine (1) according to claim 10, **characterised in that** the casing (61) forms at least one intake connection (68a) and at least one discharge opening (68b) in order to convey cooling air between intake connection (68a) and the discharge opening (68b) along at least part of a cooling body (31) that is mounted on the stator ring (29).

12. The vertical wind turbine (1) according to at least one of claims 1 to 11, **characterised by** a transmission (80) that couples a rotor (2) of the vertical wind turbine (1), which is able to rotate around the rotor rotation axis ($C_2$), to a generator (85) of the vertical wind turbine (1), wherein at least one transmission stage (80a, 80b, 80c) of the transmission (80) is embodied as a planetary gear stage (81).

13. The vertical wind turbine (1) according to claim 12, **characterised in that** at least one planet gear (80a) of the planetary gear stage (81) is connected by means of a flexible pin (81b) to a strut (81c) of the planetary gear stage (81).

14. A kit for a vertical wind turbine (1) according to at least one of the claims 1 to 13.

15. A method for operating a vertical wind turbine (1), wherein angular positions of vertical blades (7) of the vertical wind turbine (1), which are supported such that they are rotatable around a respective vertical rotor rotation axis ($C_2$), and are motor-driven pivotable around a respective blade rotation axis ($C_7$) independently of one another, are predetermined, **characterised in that** the angular positions of the blades (7) are each predetermined by means of at least one pitch motor (27) supporting the respective blade (7).

**Revendications**

1. Eolienne verticale (1) avec une variété de pales verticales (7), qui peuvent être déplacées indépendamment les unes des autres de façon rotative autour d'un axe de rotation de pale respectif ($C_7$) et sont montées sur une trajectoire circulaire commune (K) autour d'un axe de rotation de rotor vertical ($C_2$),
   **caractérisée en ce que**
   les pales (7) sont maintenues chacune en support sur au moins un moteur pas à pas (27) pour la rotation motorisée des pales (7) autour de leur axe de rotation de pale respectif (C7).

2. Eolienne verticale (1) selon la revendication 1, **caractérisée en ce que** le moteur de pas (27) est réalisé sous la forme d'un moteur couple avec au moins un anneau de rotor (30) qui est relié à la pale respective (7) de manière rigide en rotation.

3. Eolienne verticale (1) selon la revendication 1 ou 2, **caractérisée en ce que** l'anneau de rotor (30) est placé sur la circonférence extérieure de l'arbre moteur (25) du moteur de pas (27).

4. Eolienne verticale (1) selon l'une au moins des revendications 1 à 3, **caractérisée en ce que** les pales (7) sont portées par des paliers moteurs (47) dans le moteur de pas (27).

5. Eolienne verticale (1) selon au moins l'une des revendications 1 à 4, **caractérisée en ce que** les pales (7) sont constituées d'une partie supérieure de pale (13, 13e) et d'une partie inférieure de pale (13, 13f), et **en ce que** le moteur de pas est placé entre la partie supérieure de pale (13, 13e) et la partie inférieure de pale (13, 13f).

6. Eolienne verticale (1) selon au moins une des revendications 1 à 5, **caractérisée en ce que** les pales (7) sont bridées au moteur de pas (27).

7. Eolienne verticale (1) selon la revendication 6, **caractérisée en ce que** le moteur de pas (27) consiste en au moins un codeur rotatif (46a, 46b) pour déterminer une position rotative de la pale (7).

8. Eolienne verticale (1) selon l'une au moins des revendications 1 à 7, **caractérisée en ce que** chaque moteur de pas (27) comporte un carter de moteur (35) auquel est fixé un bras de rotor (10) reliant les pales (7) à un moyeu de rotor (9) de l'éolienne verticale (1).

9. Eolienne verticale (1) selon la revendication 8, **caractérisée en ce que** le bras de rotor (10) est bridé au boîtier de moteur (35).

10. Eolienne verticale (1) selon la revendication 8 ou 9, **caractérisée en ce qu'**un anneau de stator (29) du moteur de pas (27) est placé entre deux moitiés de bride (41a, 41b) d'une couronne de suspension (42) du carter de moteur (35) et/ou, au moins par sections, entre une coque supérieure (62) et une coque inférieure (63) d'un carter (61) entourant le moteur de pas (27).

11. Eolienne verticale (1) selon la revendication 10, **caractérisée en ce que** le carter (61) forme au moins une connexion d'entrée (68a) et au moins une ouverture d'échappement (68b) pour conduire l'air de refroidissement entre la connexion d'entrée (68a) et l'ouverture d'échappement (68b) au moins par sections le long d'un dissipateur thermique (31) fixé à l'anneau de stator (29).

12. Eolienne verticale (1) selon au moins l'une des revendications 1 à 11, **caractérisée en ce que la** boîte de vitesses (80) qui accouple un rotor (2) de l'éolienne verticale (1), qui peut tourner autour de l'axe de rotation (C2) du rotor, à un générateur (85) de l'éolienne verticale (1), où au moins un étage (80a, 80b, 80c) de la boîte de vitesses (80) est construit comme un étage de boîte de vitesses planétaire (81).

13. Eolienne verticale (1) selon la revendication 12, **caractérisée en ce qu'**au moins une boîte de vitesses planétaire (80a) de l'étage de boîte de vitesses planétaire (81) est relié à un pont (81c) de l'étage de boîte de vitesses planétaire (81) par l'intermédiaire d'un axe flexible (81b).

14. Kit pour une éolienne verticale (1) selon au moins une des revendications 1 à 13.

15. Méthode pour faire fonctionner une éolienne verticale (1), où les positions angulaires de pales verticales (7), qui sont montées de façon rotative autour d'un axe de rotation de rotor vertical ($C_2$) et qui sont entraînées par un moteur pour être déplacées de façon rotative autour d'un axe de rotation de pale respectif ($C_7$), sont prédéterminées, **caractérisée en ce que** les positions angulaires des pales (7) sont prédéterminées par au moins un moteur pas à pas (27) portant la pale (7).

**Fig. 1**

Fig. 2

EP 3 645 870 B1

Fig. 3

30

Fig. 4

**Fig. 5**

Fig. 6

**Fig. 7**

**Fig. 8**

**Fig. 9**

**Fig. 10**

**Fig. 11**

**Fig. 12**

**Fig. 13**

**Fig. 14**

EP 3 645 870 B1

Fig. 15

Fig. 16

Fig. 17

EP 3 645 870 B1

Fig. 18

EP 3 645 870 B1

Fig. 19

EP 3 645 870 B1

Fig. 20

EP 3 645 870 B1

Fig. 21

EP 3 645 870 B1

Fig. 22

EP 3 645 870 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015185299 A1
- EP 2235365 B1
- US 3902072 A
- US 4410806 A
- US 4494007 A
- US 4609827 A
- WO 2005100785 A1
- WO 2009082352 A1
- US 6379115 B1

**In der Beschreibung aufgeführte Nicht-Patentliteratur**

- **LIXUN ZHANG ; YINGBIN LIANG ; ERXIAO LI ; SONG ZHANG ; JIAN GUO.** Vertical Axis Wind Turbine with Individual Active Blade Pitch Control. College of Mechanical and Electrical Engineering; Harbin Engineering University, 2012
- **PARASCHIVOIU ION ; TRIFU OCTAVIAN ; SAEED F.** H-Darrieus Wind Turbine with Blade Pitch Control. *International Journal of Rotating Machinery,* vol. 2009
- **Y. STAELENS ; F. SAEED ; 1. PARASCHIVOIU.** A Straight-bladed Variablepitch VAWT Concept for Improved Power Generation. *ASME 2003, Wind Energy Symposium,* Januar 2003, vol. 2003, 146-154